# EUROPÄISCHE PATENTSCHRIFT

(11) **EP 1 174 631 B1**
(45) Veröffentlichungstag und Bekanntmachung des Hinweises auf die Patenterteilung: **24.01.2007**
(21) Anmeldenummer: 01112878.2
(22) Anmeldetag: 01.06.2001
(51) Int. Cl.: F16D 21/06, B60K 17/02, F16D 25/12

(54) **Mehrfach-Kupplungseinrichtung**
Multiple clutch device
Dispositif d'accouplement multiple

(30) Priorität: 17.07.2000 DE 10034730; 25.01.2001 DE 10103306; 28.03.2001 DE 10115236; 29.03.2001 DE 10115454
(43) Veröffentlichungstag der Anmeldung: 23.01.2002
(73) Patentinhaber: ZF Sachs AG, 97424 Schweinfurt (DE)
(72) Erfinder: Geiger, Martin, Dipl.-Ing. (FH), 97261 Güntersleben (DE); Schierling, Bernhard, Dipl.-Ing. (FH), 97273 Kürnach (DE); Steiner, Eduard, Dipl.-Ing. (FH), 97228 Rottendorf (DE); Kundermann, Wolfgang, Dipl.-Ing., 97422 Schweinfurt (DE); Kraus, Paul, Dipl.-Ing., 97464 Niederwern (DE)

(56) Entgegenhaltungen:
- EP-A- 0 718 517
- EP-A- 0 931 951
- EP-A- 1 052 421
- EP-A- 1 195 537
- DE-A1- 19 821 164
- DE-U1- 9 114 528
- GB-A- 1 348 645
- US-A- 1 866 891
- US-A- 2 771 976

## Beschreibung

Die Erfindung betrifft einer Antriebstrang nach dem Oberbegriff des Anspruchs 1.

Eine derartige Doppel-Kupplungseinrichtung ist beispielsweise aus der DE 199 21 687 A1 bekannt. Gemäß den Figuren dieser Offenlegungsschrift scheint die Kupplungseinrichtung in einen Nassraum aufgenommen zu sein, der teilweise von Wandungen des Getriebegehäuses und teilweise von einer gesonderten, eine Trennwand umfassenden Wandung begrenzt ist, die offenbar nach Montage der Kupplungseinrichtung auf Seiten des Getriebes montiert wird. Dadurch, dass die Kupplungseinrichtung gewissermaßen in ein "Gehäuse" aufgenommen ist, das teilweise von Getriebewandungen und teilweise von gesonderten, mit den Getriebewandungen zusammengefügten Wandungen gebildet ist, kann es aufgrund von Toleranzproblemen eventuell zu Leckagen kommen, die sich erst nach der Montage der Kupplungseinrichtung samt der zusätzlichen Wandung zeigen und dementsprechend eine konstenaufwendige Demontage erforderlich machen.

Demgegenüber wird nach der Erfindung vorgeschlagen, dass die Kupplungseinrichtung ein gegenüber einem Getriebegehäuse gesondertes, innerhalb einer Getriebegehäuseglocke, axial oder/und gegen Verdrehung festgelegtes, gegenüber den Kupplungsanordnungen stationäres Kupplungsgehäuse aufweist, das einen die Kupplungsanordnungen aufnehmenden und nach außen hin abgedichteten Nassraum definiert und das im Antriebsstrang getriebeseitig angebracht oder anbringbar ist.

Das gegenüber dem Getriebegehäuse gesonderte Kupplungsgehäuse ermöglicht, dass die erforderliche Dichtheit des Nassraums nach außen hin leichter gewährleistet werden kann. Hierzu trägt bei, dass das Kupplungsgehäuse aus einheitlichem Wandungsmaterial hergestellt werden kann und dass die Passung von Wandungsteilen des Kupplungsgehäuses vor der Montage der Kupplungseinrichtung samt dem Kupplungsgehäuse einfach überprüfbar ist.

Das Kupplungsgehäuse kann am Getriebegehäuse axial oder/und gegen Verdrehung festgelegt oder festlegbar sein. Ferner kann das Kupplungsgehäuse unter Vermittlung des Getriebegehäuses in Bezug auf die zueinander koaxial und radial geschachtelt angeordneten Getriebeeingangswellen zentriert oder zentrierbar ist.

Als besonders bevorzugt wird vorgeschlagen, dass das Kupplungsgehäuse eine Lagerhülse aufweist, die in eine getriebeseitige Aufnahme eingreift, vorzugsweise derart, dass das Kupplungsgehäuse in Bezug auf die sich durch die Lagerhülse erstreckenden Getriebeeingangswellen zentriert wird. Eine vorteilhafte Weiterbildung zeichnet sich dadurch aus, dass die Lagerhülse in der Aufnahme axial oder/und gegen Verdrehen gesichert ist, vorzugsweise durch aufeinander bezogene Formschluss-Eingriffsformationen, höchstvorzugsweise durch aufeinander bezogene Schnapp-Eingriffsformationen.

Es kann vorgesehen sein, dass in der Lagerhülse ein den Kupplungsanordnungen gemeinsames, gegenüber der Lagerhülse verdrehbares und gegebenenfalls rohrartiges Ringteil aufgenommen ist, über das die Kupplungsanordnungen an wenigstens einer der Getriebeeingangswellen gelagert oder lagerbar sind und das vorzugsweise mit einer jeweiligen Eingangsseite der Kupplungsanordnungen drehfest verbunden ist.

In der Regel wird es sich bei den Kupplungsanordnungen um hydraulikbetätigbare Kupplungsanordnungen mit in die Kupplungseinrichtung integrierten hydraulischen Nehmerzylindern handeln. Hierzu wird vorgeschlagen, dass die Aufnahme Hydraulikmedium-Anschlüsse zum Anschließen der Kupplungsanordnungen betätigenden hydraulischen Nehmerzylindern aufweist, wobei der Anschluss der hydraulischen Nehmerzylinder unter Vermittlung der Lagerhülse oder/und des Ringteils erfolgt.

Alternativ oder zusätzlich zu der vorstehend angesprochenen Sicherung der Lagerhülse in der Aufnahme kann vorgesehen sein, dass das Kupplungsgehäuse an einem den Nassraum begrenzenden Wandungsabschnitt am Getriebe axial oder/und gegen Verdrehen gesichert oder sicherbar ist oder/und in Bezug auf die Getriebeeingangswellen zentriert oder zentrierbar ist, unter Vermittlung von von der Wandung abstehenden Halte- oder/und Zentrierformationen und mit diesen zusammenwirkenden Gegenformationen an einer Getriebegehäusewandung.

Eine bevorzugte Ausgestaltung des Kupplungsgehäuses zeichnet sich dadurch aus, dass dieses aus mehreren, vorzugsweise aus zwei Gehäuseschalen zusammengefügt ist, die gegebenenfalls miteinander verschweißt oder verschraubt sind. Im Falle einer Verschraubung der Gehäuseschalen (dies ist bevorzugt) können entsprechende Abdichtungsmaßnahmen getroffen sein.

Eine besonders bevorzugte Ausführungsform zeichnet sich dadurch aus, dass das Kupplungsgehäuse mit wenigstens einer Betriebsmedium-Abflussleitung ausgeführt ist, die vorzugsweise als Kühlwendel ausgebildet ist oder mit einer Kühlwendel im Wärmeaustauscherbeziehung steht. Unter Vermittlung der Betriebsmedium-Abflussleitung lässt sich auf einfache Weise ein Betriebsmediumkreislauf durch den Nassraum aufrecht erhalten.

Große Kostenvorteile in Bezug auf die Montage der Kupplungseinrichtung in einem Antriebsstrang lassen sich dadurch erreichen, dass die Kupplungseinrichtung samt dem Kupplungsgehäuse als vormontierte Baueinheit getriebeseitig in dem Antriebsstrang montiert und vorzugsweise als Baueinheit vom Getriebe demontierbar ist. Hierdurch wird die Montage der Kupplungseinrichtung wesentlich vereinfacht und es werden die Fehlermöglichkeitene bei der Montage reduziert.

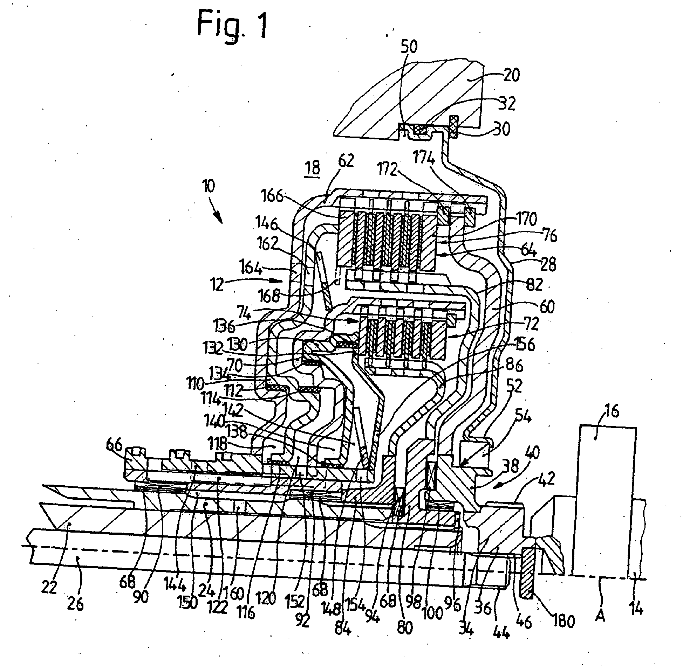

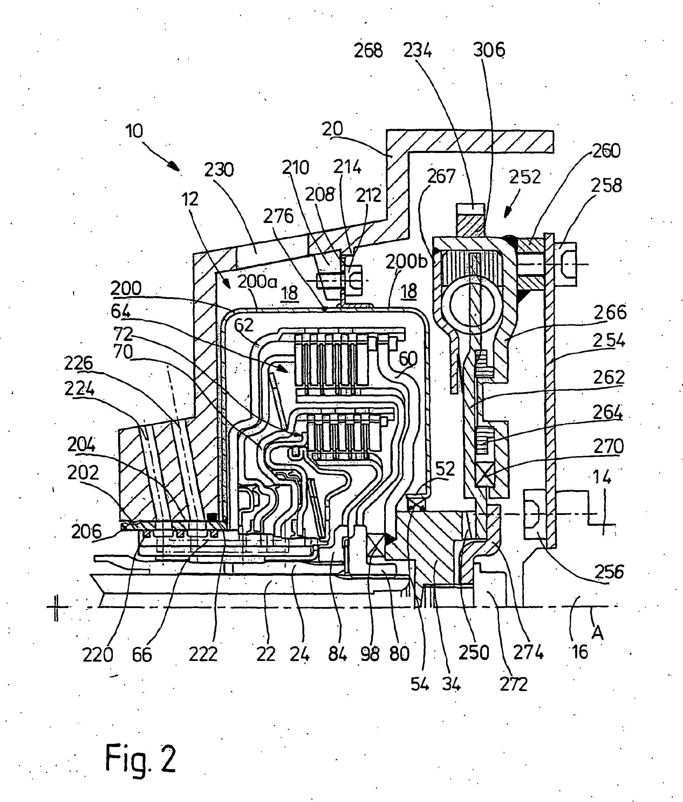

Die Erfindung wird im Folgenden anhand von in den Figuren gezeigten Ausführungsbeispielen näher erläutert, wobei von einer in Fig. 1 gezeigten, in älteren Anmeldungen der Anmelderin behandelten Doppelkupplung ausgegangen wird (Fig. 1), auf deren Grundlage dann Ausführungsbeispiele der Erfindung (Fig. 2 bis 10) erläutert werden.
- Fig. 1: zeigt in einer teilgeschnittenen Darstellung eine in einem Antriebsstrang eines Kraftfahrzeugs zwischen einem Getriebe oder einer Antriebseinheit angeordnete Doppelkupplung mit zwei Lamellen-Kupplungsanordnungen.
- Fig. 2: zeigt in einer Fig. 1 entsprechende Darstellung eines Ausführungsbeispiels eines erfindungsgemäßen Antriebssystems mit einer ein stationäres Kupplungsgehäuse aufweisenden Doppelkupplung und einer hierzu in Reihe geschalteten Torsionsschwingungsdämpferanordnung des Zwei-Massen-Schwungrad-Typs.
- Fig. 3: veranschaulicht eine Ausführungsvariante des stationären Kupplungsgehäuses.
- Fig. 4: zeigt eine Ausführungsvariante des Antriebssystems der Fig. 2.
- Fig. 5: zeigt eine weitere Variante des Antriebssystems der Fig. 2.
- Fig. 6: zeigt in einer der Fig. 1 entsprechenden Darstellung ein weiteres Ausführungsbeispiel eines erfindungsgemäßen Antriebssystems mit einer Doppelkupplung und einer Torsionsschwingungsdämpferanordnung, die gemeinsam in ein stationäres Kupplungsgehäuse aufgenommen sind.
- Fig. 7: zeigt eine Ausführungsvariante des Antriebssystems der Fig. 6.
- Fig. 8: zeigt eine weitere Ausführungsvariante des Antriebssystems der Fig. 6.
- Fig. 9: veranschaulicht eine weitere Ausführungsvariante des Antriebssystems der Fig. 6.
- Fig. 10: veranschaulicht, wie das stationäre Kupplungsgehäuse der Ausführungsbeispiele der Fig. 2 bis 9 mit wenigstens einer Ölabfuhrleitung ausgeführt sein könnte.
- Fig. 11-13: zeigen nicht erfindungsgemäße Beispiele von Antriebssystemen, umfassend eine Doppelkupplung, einen Torsionsschwingungsdämpfer und eine Elektromaschine in der Art eines Kurbelwellenstartergenerators.
- Fig. 14-19: zeigen jeweils Antriebssysteme in der Art von den Antriebssystemen der Fig. 2 bis 10, jeweils umfassend eine Elektromaschine in der Art eines Kurbelwellenstartergenerators.

Fig. 1 zeigt eine in einem Antriebsstrang 10 zwischen einer Antriebseinheit und einem Getriebe angeordnete Doppelkupplung 12. Von der Antriebseinheit, beispielsweise eine Brennkraftmaschine, ist in Fig. 1 nur eine Abtriebswelle 14, gegebenenfalls Kurbelwelle 14, mit einem zur Ankopplung eines nicht dargestellten Torsionsschwingungsdämpfers dienenden Koppelende 16 dargestellt. Das Getriebe ist in Fig. 1 durch einen eine Getriebegehäuseglocke 18 begrenzenden Getriebegehäuseabschnitt 20 und zwei Getriebeeingangswellen 22 und 24 repräsentiert, die beide als Hohlwellen ausgebildet sind, wobei die Getriebeeingangswelle 22 sich im Wesentlichen koaxial zur Getriebeeingangswelle 24 durch diese hindurch erstreckt. Im Inneren der Getriebeeingangswelle 22 ist eine Pumpenantriebswelle angeordnet, die zum Antrieb einer getriebeseitigen, in Fig. 1 nicht dargestellten Ölpumpe (etwa die Ölpumpe 220) dient, wie noch näher erläutert wird. Ist wenigstens eine elektromotorisch angetriebene Ölpumpe vorgesehen, kann auf die Pumpenantriebswelle verzichtet werden.

Die Doppelkupplung 12 ist in die Getriebegehäuseglocke 18 aufgenommen, wobei der Glockeninnenraum in Richtung zur Antriebseinheit durch einen Deckel 28 verschlossen ist, der in eine Glockengehäuseöffnung eingepresst ist oder/und darin durch einen Sprengring 30 gesichert ist. Weist die Doppelkupplung wie das in Fig. 1 gezeigte Ausführungsbeispiel, nasslaufende Reibungskupplungen, beispielsweise Lamellenkupplungen, auf, so ist es in der Regel angebracht, für einen Dichteingriff zwischen dem Deckel 28 und dem von der Getriebegehäuseglocke 18 gebildeten Kupplungsgehäuse zu sorgen, der beispielsweise mittels eines O-Rings oder eines sonstigen Dichtrings hergestellt sein kann. In Fig. 1 ist ein Dichtring 32 mit zwei Dichtlippen gezeigt.

Als Eingangsseite der Doppelkupplung 12 dient eine Kupplungsnabe 34, die aus noch näher zu erläuternden Gründen aus zwei aneinander festgelegten Ringabschnitten 36, 38 besteht. Die Kupplungsnabe 34 erstreckt sich durch eine zentrale Öffnung des Deckels 28 in Richtung zur Antriebseinheit und ist über eine Außenverzahnung 42 mit dem nicht dargestellten Torsionsschwingungsdämpfer gekoppelt, so dass über diesen eine Momentenübertragungsverbindung zwischen dem Koppelende 16 der Kurbelwelle 14 und der Kupplungsnabe 34 besteht. Möchte man auf einen Torsionsschwingungsdämpfer generell oder an dieser Stelle im Antriebsstrang verzichten, so kann die Kopplungsnabe 34 auch unmittelbar mit dem Koppelende 16 gekoppelt werden. Die Pumpenantriebswelle 26 weist an ihrem vom Getriebe fernen Ende eine Außenverzahnung 44 auf, die in eine Innenverzahnung 46 des Ringabschnitts 36 der Kupplungsnabe 34 eingreift, so dass sich die Pumpenantriebswelle 26 mit der Kupplungsnabe 34 mitdreht und dementsprechend die Ölpumpe antreibt, wenn der Kupplungsnabe 34 eine Drehbewegung erteilt wird, im Regelfall von der Antriebseinheit und in manchen Betriebssituationen eventuell auch vom Getriebe her über die Doppelkupplung (beispielsweise in einer durch das Stichwort "Motorbremse" charakterisierte Betriebssituation).

Der Deckel 28 erstreckt sich radial zwischen einem eine Radialausnehmung 50 der Gehäuseglocke 18 begrenzenden ringförmigen Umfangswandabschnitt der Gehäuseglocke 18 und dem Ringabschnitt 38 der Nabe 34, wobei es vorteilhaft ist, wenn zwischen einem radial inneren Wandbereich 52 des Deckels 28 und der Nabe 34, speziell dem Ringabschnitt 38, eine Dichtungs- oder/und Drehlageranordnung 54 (insbesondere eine gegebenenfalls als Radialwellendichtringanordnung ausgeführte Dichtungsanordnung) vorgesehen ist, speziell dann, wenn - wie beim gezeigten Ausführungsbeispiel - der Deckel 28 an der Gehäuseglocke 18 festgelegt ist und sich dementsprechend mit der Doppelkupplung 12 nicht mitdreht. Eine Abdichtung zwischen dem Deckel und der Nabe wird insbesondere dann erforderlich sein, wenn es sich, wie beim Ausführungsbeispiel, bei den Kupplungsanordnungen der Doppelkupplung um nasslaufende Kupplungen handelt. Eine hohe Betriebssicherheit auch im Falle von auftretenden Schwingungen und Vibrationen wird erreicht, wenn die Dichtungsoder/und Drehlageranordnung 54 axial am Deckel 28 oder/und an der Kupplungsnabe 34 gesichert ist, etwa durch einen nach radial innen umgebogenen Endabschnitt des Deckelrands 52, wie in Fig. 1 zu erkennen ist.

An dem Ringabschnitt 38 der Nabe 34 ist ein Trägerblech 60 drehfest angebracht, das zur Drehmomentübertragung zwischen der Nabe 34 und einem Außenlamellenträger 62 einer ersten Lamellen-Kupplungsanordnung 64 dient. Der Außenlamellenträger 62 erstreckt sich in Richtung zum Getriebe und nach radial innen zu einem Ringteil 66, an dem der Außenlamellenträger drehfest angebracht ist und das mittels einer Axial- und Radial-Lageranordnung 68 an den beiden Getriebeeingangswellen 22 und 24 derart gelagert ist, dass sowohl radiale als auch axiale Kräfte an den Getriebeeingangswellen abgestützt werden. Die Axial- und Radial-Lageranordnung 68 ermöglicht eine Relativverdrehung zwischen dem Ringteil 66 einerseits und sowohl der Getriebeeingangswelle 22 als auch der Getriebeeingangswelle 24 andererseits. Auf den Aufbau und die Funktionsweise der Axial- und Radial-Lageranordnung wird später noch näher eingegangen.

Am Ringteil 66 ist axial weiter in Richtung zur Antriebseinheit ein Außenlamellenträger 70 einer zweiten Lamellen-Kupplungsanordnung 72 drehfest angebracht, deren Lamellenpaket 74 vom Lamellenpaket 76 der ersten Lamellen-Kupplungsanordnung ringartig umgeben wird. Die beiden Außenlamellenträger 62 und 70 sind, wie schon angedeutet, durch das Ringteil 66 drehfest miteinander verbunden und stehen gemeinsam über das mittels einer Außenverzahnung mit dem Außenlamellenträger 62 in formschlüssigem Drehmomentübertragungseingriff stehende Trägerblech 60 mit der Kupplungsnabe 34 und damit - über den nicht dargestellten Torsionsschwingungsdämpfer - mit der Kurbelwelle 14 der Antriebseinheit in Momentenübertragungsverbindung. Bezogen auf den normalen Momentenfluss von der Antriebseinheit zum Getriebe dienen die Außenlamellenträger 62 und 70 jeweils als Eingangsseite der Lamellen-Kupplungsanordnung 64 beziehungsweise 72.

Auf der Getriebeeingangswelle 22 ist mittels einer Keilnutenverzahnung oder dergleichen ein Nabenteil 80 eines Innenlamellenträgers 82 der ersten Lamellen-Kupplungsanordnung 64 drehfest angeordnet. In entsprechender Weise ist auf der radial äußeren Getriebeeingangswelle 24 mittels einer Keilnutenverzahnung oder dergeichen ein Nabenteil 84 eines Innenlamellenträger 86 der zweiten Lamellen-Kupplungsanordnung 72 drehfest angeordnet. Bezogen auf den Regel-Momentenfluss von der Antriebseinheit in Richtung zum Getriebe dienen die Innenlamellenträger 82 und 86 als Ausgangsseite der ersten beziehungsweise zweiten Lamellen-Kupplungsanordnung 64 beziehungsweise 72.

Es wird noch einmal auf die radiale und axiale Lagerung des Ringteils 66 an den Getriebeeingangswellen 22 und 24 Bezug genommen. Zur radialen Lagerung des Ringteils 66 dienen zwei Radial-Lagerbaugruppen 90 und 92, die zwischen der radial äußeren Getriebeeingangswelle 24 und dem Ringteil 66 wirksam sind. Die axiale Lagerung des Ringteils 66 erfolgt betreffend einer Abstützung in Richtung zur Antriebseinheit über das Nabenteil 84, ein Axiallager 94, das Nabenteil 80 und einen das Nabenteil 80 an der radial inneren Getriebeeingangswelle 22 axial sichernden Sprengring 96. Das Ringteil 38 der Kupplungsnabe 34 ist wiederum über ein Axiallager 98 und ein Radiallager 100 an dem Nabenteil 80 gelagert. In Richtung zum Getriebe ist das Nabenteil 80 über das Axiallager 94 an einem Endabschnitt der radial äußeren Getriebeeingangswelle 24 axial abgestützt. Das Nabenteil 84 kann unmittelbar an einem Ringanschlag oder dergleichen oder einem gesonderten Sprengring oder dergleichen in Richtung zum Getriebe an der Getriebeeingangswelle 24 abgestützt sein. Da das Nabenteil 84 und das Ringteil 66 gegeneinander relativ-verdrehbar sind, kann zwischen diesen Komponenten ein Axiallager vorgesehen sein, sofern nicht das Lager 92 sowohl Axiallager- als auch Radiallagerfunktion hat. Vom Letzteren wird in Bezug auf das Ausführungsbeispiel in Fig. 1 ausgegangen.

Große Vorteile ergeben sich daraus, wenn, wie beim gezeigten Ausführungsbeispiel, die sich in radialer Richtung erstreckenden Abschnitte der Außenlamellenträger 62 und 70 auf einer axialen Seite einer sich zu einer Achse A der Doppelkupplung 12 orthogonal erstreckenden Radialebene angeordnet sind und die sich in radialer Richtung erstreckenden Abschnitte der Innenlamellenträger 82 und 86 der beiden Lamellen-Kupplungsanordnungen auf der anderen axialen Seite dieser Radialebene angeordnet sind. Hierdurch wird ein besonders kompakter Aufbau möglich, insbesondere dann, wenn - wie beim gezeigten Ausführungsbeispiel - Lamellenträger einer Sorte (Außenlamellenträger oder Innenlamellenträger, beim Ausführungsbeispiel die Außenlamellenträger) drehfest miteinander verbunden sind und jeweils als Eingangsseite der betreffenden Lamellen-Kupplungsanordnung in Bezug auf den Kraftfluss von der Antriebseinheit zum Getriebe dienen.

In die Doppelkupplung 12 sind Betätigungskolben zur Betätigung der Lamellen-Kupplungsanordnungen integriert, im Falle des gezeigten Ausführungsbeispiels zur Betätigung der Lamellen-Kupplungsanordnungen im Sinne eines Einrückens. Ein der ersten Lamellen-Kupplungsanordnung 64 zugeordneter Betätigungskolben 110 ist axial zwischen dem sich radial erstreckenden Abschnitt des Außenlamellenträgers 62 der ersten Lamellen-Kupplungsanordnung 64 und dem sich radial erstreckenden Abschnitt des Außenlamellenträgers 70 der zweiten Lamellen-Kupplungsanordnung 72 angeordnet und an beiden Außenlamellenträgern sowie am Ringteil 66 mittels Dichtungen 112, 114, 116 axial verschiebbar und eine zwischen dem Außenlamellenträger 62 und dem Betätigungskolben 110 ausgebildete Druckkammer 118 sowie eine zwischen dem Betätigungskolben 110 und dem Außenlamellenträger 70 ausgebildete Fliehkraft-Druckausgleichskammer 120 abdichtend geführt. Die Druckkammer 118 steht über einen in dem Ringteil 66 ausgebildeten Druckmediumkanal 122 mit einem zugeordneten hydraulischen Geberzylinder, etwa dem Geberzylinder 230, in Verbindung, wobei der Druckmediumskanal 122 über eine das Ringteil 66 aufnehmende, gegebenenfalls getriebefeste Anschlusshülse an dem Geberzylinder angeschlossen ist. Die Anschlusshülse und das Ringteil 66 bilden eine Drehverbindung. Zum Ringteil 66 ist in diesem Zusammenhang zu erwähnen, dass dieses für eine einfachere Herstellbarkeit insbesondere hinsichtlich des Druckmediumkanals 122 sowie eines weiteren Druckmediumkanals zweiteilig hergestellt ist mit zwei ineinander gesteckten hülsenartigen Ringteilabschnitten, wie in Fig. 1 angedeutet ist.

Ein der zweiten Lamellen-Kupplungsanordnung 72 zugeordneter Betätigungskolben 130 ist axial zwischen dem Außenlamellenträger 70 der zweiten Lamellen-Kupplungsanordnung 72 und einem sich im Wesentlichen radial erstreckenden und an einem vom Getriebe fernen axialen Endbereich des Ringteils 66 drehfest und fluiddicht angebrachten Wandungsteil 132 angeordnet und mittels Dichtungen 134, 136 und 138 am Außenlamellenträger 70, dem Wandungsteil 132 und dem Ringteil 66 axial verschiebbar und eine zwischen dem Außenlamellenträger 70 und dem Betätigungskolben 130 ausgebildete Druckkammer 140 sowie eine zwischen dem Betätigungskolben 130 und dem Wandungsteil 132 ausgebildete Fliehkraft-Druckausgleichskammer 142 abdichtend geführt. Die Druckkammer 140 ist über einen weiteren (schon erwähnten) Druckmediumskanal 144 in entsprechender Weise wie die Druckkammer 118 an einem zugeordneten Geberzylinder, etwa dem Geberzylinder 236, angeschlossen. Mittels den Geberzylindern kann an den beiden Druckkammern 118 und 140 wahlweise (gegebenenfalls auch gleichzeitig) ein Betätigungsdruck angelegt werden, um die erste Lamellen-Kupplungsanordnung 64 oder/und die zweite Lamellen-Kupplungsanordnung 72 im Sinne eines Einrückens zu betätigen. Zum Rückstellen, also zum Ausrücken der Kupplungen dienen Membranfedern 146, 148, von denen die dem Betätigungskolben 130 zugeordnete Membranfeder 148 in der Fliehkraft-Druckausgleichskammer 142 aufgenommen ist.

Die Druckkammern 118 und 140 sind, jedenfalls während normalen Betriebszuständen der Doppelkupplung 12, vollständig mit Druckmedium (hier Hydrauliköl) gefüllt, und der Betätigungszustand der Lamellen-Kupplungsanordnungen hängt an sich vom an den Druckkammern angelegten Druckmediumsdruck ab. Da sich aber die Außenlamellenträger 62 und 70 samt dem Ringteil 66 und dem Betätigungskolben 110 und 130 sowie dem Wandungsteil 132 im Fahrbetrieb mit der Kurbelwelle 14 mitdrehen, kommt es auch ohne Druckanlegung an den Druckkammern 118 und 140 von seiten der Drucksteuereinrichtung zu fliehkraftbedingten Druckerhöhungen in den Druckkammern, die zumindest bei größeren Drehzahlen zu einem ungewollten Einrücken oder zumindest Schleifen der Lamellen-Kupplungsanordnungen führen könnten. Aus diesem Grunde sind die schon erwähnten Fliehkraft-Druckausgleichskammern 120, 142 vorgesehen, die ein Druckausgleichsmedium aufnehmen und in denen es in entsprechender Weise zu fliehkraftbedingten Druckerhöhungen kommt, die die in den Druckkammern auftretenden fliehkraftbedingten Druckerhöhungen kompensieren.

Man könnte daran denken, die Fliehkraft-Druckausgleichskammern 120 und 142 permanent mit Druckausgleichsmedium, beispielsweise Öl, zu füllen, wobei man gegebenenfalls einen Volumenausgleich zur Aufnahme von im Zuge einer Betätigung der Betätigungskolben verdrängtem Druckausgleichsmedium vorsehen könnte. Bei der in Fig. 1 gezeigten Ausführungsform werden die Fliehkraft-Druckausgleichskammern 120, 142 jeweils erst im Betrieb des Antriebsstrangs mit Druckausgleichsmedium gefüllt, und zwar in Verbindung mit der Zufuhr von Kühlfluid, beim gezeigten Ausführungsbeispiel speziell Kühlöl, zu den Lamellen-Kupplungsanordnungen 64 und 72 über einen zwischen dem Ringteil 66 und der äußeren Getriebeeingangswelle 24 ausgebildeten Ringkanal 150, dem die für das Kühlöl durchlässigen Lager 90, 92 zuzurechnen sind. Das gegebenenfalls von der Pumpe 220 bereitgestellte Kühlöl fließt von einem getriebeseitigen Anschluss zwischen dem Ringteil und der Getriebeeingangswelle 24 in Richtung zur Antriebseinheit durch das Lager 90 und das Lager 92 hindurch und strömt dann in einem Teilstrom zwischen dem vom Getriebe fernen Endabschnitt des Ringteils 66 und dem Nabenteil 84 nach radial außen in Richtung zum Lamellenpaket 74 der zweiten Lamellen-Kupplungsanordnung 72, tritt aufgrund von Durchlassöffnungen im Innenlamellenträger 86 in den Bereich der Lamellen ein, strömt zwischen den Lamellen des Lamellenpakets 74 beziehungsweise durch Reibbelagnuten oder dergleichen dieser Lamellen nach radial außen, tritt durch Durchlassöffnungen im Außenlamellenträger 70 und Durchlassöffnungen im Innenlamellenträger 82 in den Bereich des Lamellenpakets 76 der ersten Lamellen-Kupplungsanordnung 64 ein, strömt zwischen den Lamellen dieses Lamellenpakets beziehungsweise durch Belagnuten oder dergleichen dieser Lamellen nach radial außen und fließt dann schließlich durch Durchlassöffnungen im Außenlamellenträger 62 nach radial außen ab. An der Kühlölzufuhrströmung zwischen dem Ringteil 66 und der Getriebeeingangswelle 24 sind auch die Fliehkraft-Druckausgleichskammern 120, 142 angeschlossen, und zwar mittels Radialbohrungen 152, 154 im Ringteil 66. Da bei stehender Antriebseinheit das als Druckausgleichsmedium dienende Kühlöl in den Druckausgleichskammern 120, 142 mangels Fliehkräften aus den Druckausgleichskammern abläuft, werden die Druckausgleichskammern jeweils wieder neu während des Betriebs des Antriebsstrangs (des Kraftfahrzeugs) gefüllt.

Da eine der Druckkammer 140 zugeordnete Druckbeaufschlagungsfläche des Betätigungskolbens 130 kleiner ist und sich überdies weniger weit nach radial außen erstreckt als eine der Druckausgleichskammer 142. zugeordnete Druckbeaufschlagungsfläche des Kolbens 130, ist in dem Wandungsteil 132 wenigstens eine Füllstandsbegrenzungsöffnung 156 ausgebildet, die einen maximalen, die erforderliche Fliehkraftkompensation ergebenden Radialfüllstand der Druckausgleichskammer 142 einstellt. Ist der maximale Füllstand erreicht, so fließt das über die Bohrung 154 zugeführte Kühlöl durch die Füllstandsbegrenzungsöffnung 156 ab und vereinigt sich mit dem zwischen dem Ringteil 66 und dem Nabenteil 84 nach radial außen tretenden Kühlölstrom. Im Falle des Kolbens 110 sind die der Druckkammer 118 und die der Druckausgleichskammer 120 zugeordneten Druckbeaufschlagungsflächen des Kolbens gleich groß und erstrecken sich im gleichen Radialbereich, so dass für die Druckausgleichskammer 120 entsprechende Füllstandsbegrenzungsmittel nicht erforderlich sind.

Der Vollständigkeit halber soll noch erwähnt werden, dass im Betrieb vorzugsweise noch weitere Kühlölströmungen auftreten. So ist in der Getriebeeingangswelle 24 wenigstens eine Radialbohrung 160 vorgesehen, über die sowie über einen Ringkanal zwischen den beiden Getriebeeingangswellen ein weiterer Kühlölteilstrom fließt, der sich in zwei Teilströme aufspaltet, von denen einer zwischen den beiden Nabenteilen 80 und 84 (durch das Axiallager 94) nach radial außen fließt und der andere Teilstrom zwischen dem getriebefernen Endbereich der Getriebeeingangswelle 22 und dem Nabenteil 80 sowie zwischen diesem Nabenteil 80 und dem Ringabschnitt 38 der Kupplungsnabe 34 (durch die Lager 98 und 100) nach radial außen strömt.

Weitere Einzelheiten der Doppelkupplung 12 gemäß dem beschriebenen Ausführungsbeispiel sind für den Fachmann ohne weiteres aus Fig. 1 entnehmbar. So ist die Axialbohrung im Ringabschnitt 36 der Kupplungsnabe 34, in der die Innenverzahnung 46 für die Pumpenantriebswelle ausgebildet ist, durch einen darin festgelegten Stopfen, 180 öldicht verschlossen. Das Trägerblech 60 ist am Außenlamellenträger 62 durch zwei Halteringe 172, 174 axial fixiert, von denen der Haltering 172 auch die Endlamelle 170 axial abstützt. Ein entsprechender Haltering ist auch für die Abstützung des Lamellenpakets 74 am Außenlamellenträger 70 vorgesehen.

Betreffend weitere Einzelheiten und vorteilhafte Ausgestaltungen der Doppelkupplung 12 wird auf die deutschen Patentanmeldungen 199 55 365.3 (AT 17.11.1999); 100 04 179.5, 100 04 186.8, 100 04 184.1, 100 04 189.2, 100 04 190.6, 100 04 105.7 (alle AT 01.02.2000); 100 34 730.4 (AT 17.07.2000) verwiesen. Es wird hierzu darauf hingewiesen, dass Fig. 1 der vorliegenden Anmeldung der Fig. 1 dieser Anmeldungsserie entspricht.

Gemäß Fig. 1 ist ein die Doppelkupplung aufnehmender Nassraum vom Getriebegehäuse 20 und dem nach der Montage der Doppelkupplung eingesetzten Deckel 28 begrenzt. Demgegenüber weist die Doppelkupplung 12 des in Fig. 2 gezeigten Ausführungsbeispiels ein aus zwei Halbschalen 200a und 200b zusammengeschweißtes, glockenartiges Gehäuse 200 auf, das die Kupplungsanordnungen 64, 72 mit den Lamellenpaketen und den Lamellenträgern aufnimmt. Das Gehäuse 200 weist eine an der Halbschale 200a angeschweißte Lagerhülse 202 auf, die das auch als Ölzuführnabe bezeichenbare Ringteil 66 aufnimmt und in eine zylindrische Aufnahme 204 des Getriebegehäuses 20 eingeschoben ist. Die Aufnahme 204 und die Lagerhülse 202 weisen Schnappverbinder 206 auf, die ineinander greifen und die Lagerhülse 202 und damit das gesamte Gehäuse 200 axial und gegen Verdrehung am Getriebegehäuse 20 sichern.

Alternativ oder zusätzlich kann das Gehäuse 200 auch mit dem Getriebegehäuse 20 über eine oder mehrere angeschweißte Befestigungslaschen 208 verbunden, beispielsweise verschraubt sein. In Fig. 2 ist eine Verschraubung mit einem Befestigungsauge 210 am Getriebegehäuse 20 dargestellt. 212 bezeichnet die hierfür verwendete Schraube. Eine derartige Befestigung des Kupplungsgehäuses 200 direkt am Getriebegehäuse 20 ist dahingehend vorteilhaft, dass Schwingungen des Kupplungsgehäuses gegenüber dem Getriebegehäuse und hiermit im Zusammenhang stehende Geräuschentwicklungen vermieden werden. Ein Zentrierbund 214 sorgt für eine Zentrierung des Kupplungsgehäuses 200 unabhängig von der durch die Lagerhülse 202 erreichten Zentrierung.

Das Innere des Kupplungsgehäuses 200 (der "Nassraum") ist durch verschiedene Dichtungen nach außen hin abgedichtet. Zwischen der sich mit der Motordrehzahl drehenden, auch als Zentralnabe bezeichenbaren Kupplungsnabe 34 und einem flanschartigen Rand 52 des Kupplungsgehäuses ist ein Radialwellendichtring 54 oder dergleichen vorgesehen. Weitere Dichtungen 220 sind zwischen der Lagerhülse 202 und dem Ringteil 26 wirksam und dichten zwei den hydraulischen Nehmerzylindern der beiden Lamellen-Kupplungsanordnungen der Doppelkupplung 12 zugeordnete Hydraulikanschlüsse gegeneinander ab. Entsprechende Dichtungen können auch zwischen der Lagerhülse 202 und dem die Aufnahme 204 aufweisenden Abschnitt des Kupplungsgehäuses 20 vorgesehen sein. 222 bezeichnet eine-derartige statische Dichtung. Das Drucköl zur Betätigung der Kupplungsanordnungen wird vom Getriebe her durch zwei die Hydraulikanschlüsse bildende Ölzufuhrbohrungen 224 und 226 zugeführt.

Zur besseren Kühlung des die Doppelkupplung samt dem Gehäuse 200 aufnehmenden Aufnahmeraums (Glockeninnenraums) kann die Getriebegehäuseglocke 18 mit einer oder mehreren Öffnungen 230 ausgeführt sein. Diese Öffnungen 230 können auch zur Montage beziehungsweise Demontage von der Kupplungseinrichtung zugeordneten Zusatzgeräten dienen.

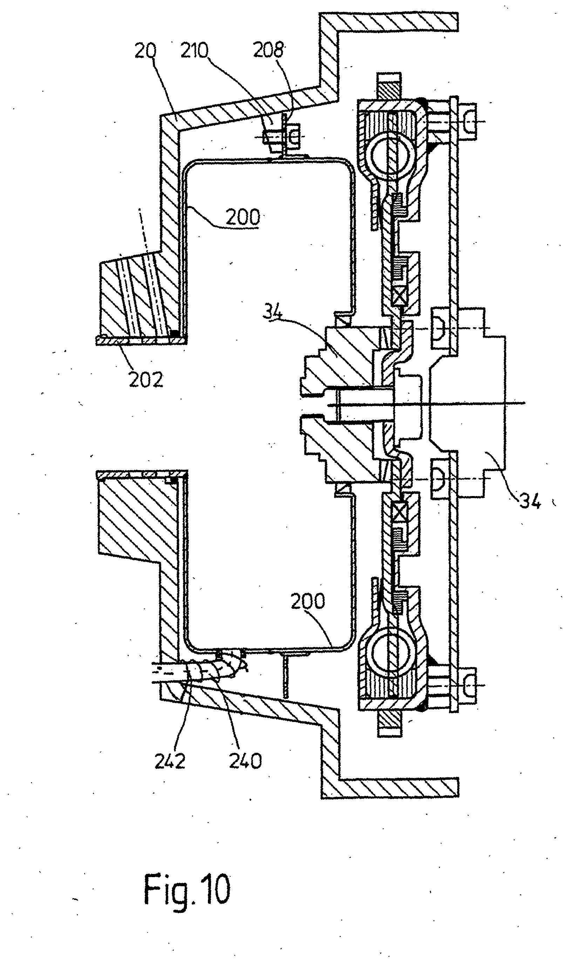

Wie bei der Konstruktion der Fig. 1 wird Kühlöl vom Getriebe her dem Ringteil 66 im Bereich dessen getriebeseitigen Endes zugeführt und dann durch Ölkanäle ins Innere der Doppelkupplung zu deren Lamellenkupplungsanordnungen 64 und 72 geleitet. Das Kühlöl wird durch das Gehäuse 200 im Bereich des von diesem begrenzten Nassraums gehalten. Wie in Fig. 10 gezeigt, kann das Gehäuse 200 wenigstens eine Ölabfuhrleitung 240 aufweisen, die sich in einem unteren Bereich des Gehäuses ansammelndes Kühlöl zu einem Kühlölreservoir oder einer Kühlölpumpe abführt. Die Abführleitung 240 kann von einer Kühlwendel 242 umwunden sein oder selbst in der Art einer Kühlwendel geführt sein, um das Kühlöl schon beim Abtransport aus dem Innenraum des Gehäuses 200 zu kühlen.

Die Kupplungsnabe 34 ist beim Beispiel der Fig. 2 ohne Innenverzahnung für eine Pumpenantriebswelle ausgeführt. Anstelle einer mechanischen Ölpumpe kann eine elektrische Ölpumpe vorgesehen sein. Der Außenlamellenträger 62 ist wie bei der Konstruktion der Fig. 1 durch eine Mitnehmerscheibe 60 oder dergleichen mit der Kupplungsnabe 34 gekoppelt. Die Mitnehmerscheibe 60 ist beim vorliegenden Beispiel mit der Kupplungsnabe 34 verschweißt.

Die als Eingangsseite der Doppelkupplung 12 fungierende Kupplungsnabe 34 ist über eine sogenannte Hirth-Verzahnung 250 mit der Ausgangsseite eines Torsionsschwingungsdämpfers 252 gekoppelt. Im vorliegenden Fall handelt es sich bei dem Torsionsschwingungsdämpfer 252 um einen Torsionsschwingungsdämpfer des Zwei-Massen-Schwungrad- oder ZMS-Typs, und zwar speziell um ein sogenanntes Planetenrad-Zwei-Massen-Schwungrad, das beim vorliegenden Beispiel außerhalb des Kupplungsgehäuses 200 angeordnet ist. Die Eingangsseite des Torsionsschwingungsdämpfers 252 ist über eine Flexplatte 254 an der Abtriebswelle 14 (insbesondere Kurbelwelle 14) der Antriebseinheit angebunden. 256 bezeichnet eine die Flexplatte 254 am Koppelende 16 der Abtriebswelle befestigende Schraube. 258 bezeichnet eine die Flexplatte 254 an der Eingangsseite des Torsionsschwingungsdämpfers befestigende Schraube, die in ein an einem Blech der Eingangsseite angeschweißtes Klötzchen 260 eingeschraubt ist.

Das Zwei-Massen-Schwungrad 252 weist ein ZMS-Hohlrad 262, ZMS-Planetenräder 264 und einen Planetenradträger 266 auf. Der Planetenradträger 266 dient als Eingangsseite und das Hohlrad 262 dient als Ausgangsseite des Torsionsschwingungsdämpfers. Zwischen Eingangsseite und Ausgangsseite ist eine Dämpferelementenanordnung 268 wirksam. 270 bezeichnet ein Axiallager des .Zwei-Massen-Schwungrads, über das sich das Hohlrad 162 am Planetenradträger 266 abstützt. Nähere Einzelheiten des Zwei-Massen-Schwungrads 252 brauchen hier nicht erläutert werden, da es sich um eine an sich bekannte Konstruktion der Anmelderin handelt. Es wird beispielsweise auf die diesbezüglich einschlägige DE 199 58 813 A1 verwiesen.

Radial außen trägt die Eingangsseite des ZMS 252 eine Ersatz-Drehmasse 306, die vorliegend mit einem Anlasser-Zahnkranz 234 ausgeführt ist.

Der Drehmomentenfluss von der Antriebseinheit zu den angetriebenen Rädern des Kraftfahrzeugs geht von der Abtriebswelle 14 auf die Flexplatte 254, dann auf die Eingangs- oder Primärseite 266 des Zwei-Massen-Schwungrads 252, dann über das Hohlrad 262 unter Vermittlung der Hirth-Verzahnung 250 auf die Kupplungsnabe 34 und dann über den Mitnehmer 60 auf den als Eingangsseite der radial äußeren Kupplungsanordnung dienenden Außenlamellenträger 62. Der Drehkopplungseingriff der Hirth-Verzahnung 250 wird unter Vermittlung einer auf die Verzahnung wirkenden Axialkraft aufrecht erhalten, die von einer in die Kupplungsnabe 34 eingeschraubten Zentralschraube 272 aufgebracht wird, die über ein topfförmiges Element 274 einen radial inneren Hirth-Verzahnungs-Koppelbereich des Hohlrads 262 gegen einen zugeordneten Hirth-Verzahnungs-Koppelbereich der Kupplungsnabe 34 drückt.

Ein wesentlicher Vorteil der in Fig. 2 gezeigten Konstruktion ist, dass die Doppelkupplung 12 einschließlich dem auch als Ölzufuhrnabe bezeichenbaren Ringteil 66, der Drehdurchführungen beziehungsweise Dichtungen und dem Gehäuse 200 als vormontierte Baueinheit beziehungsweise als vormontiertes Modul anlieferbar und in einer Gehäuseglocke eines Getriebes beziehungsweise in einem Antriebsstrang montierbar ist. Zu dieser vormontierten Baueinheit kann schon die Kupplungsnabe 34 samt dem Mitnehmer 60 und dem zwischen dem Gehäuse 200 und der Kupplungsnabe 34 wirksamen Dichtung 54 gehören. Diese Baueinheit kann dann den Getriebeeingangswellen 22, 24 aufgeschoben werden, wobei die Lagerhülse 202 samt dem darin enthaltenen Ringteil 66 in die Aufnahme 204 eingeschoben wird. Da die Doppelkupplung 12 im fertiggestellten Antriebsstrang unter Vermittlung des Torsionsschwingungsdämpfers 252 und der Flexplatte 254 an der Abtriebswelle 214 in Richtung zur Antriebseinheit axial abstützbar ist, kann auf einen eine Abstützung in Richtung zur Antriebseinheit hin vorsehenden Sicherungsring an einer der Getriebeeingangswellen entsprechend dem Sicherungsring 96 gemäß Fig. 1 verzichtet werden. Demgemäß ist es nicht erforderlich, die Kupplungsnabe 34 und den Mitnehmer 60 nachträglich zu montieren.

Die Montierbarkeit der Doppelkupplung 12 einschließlich dem Gehäuse 200 und der als Eingangsseite der Kupplung dienenden Kupplungsnabe 34 als Modul oder Baueinheit bietet den Vorteil, dass die Montage vereinfacht ist und demgemäß Fehlermöglichkeiten bei der Montage minimiert sind. Die Torsionsschwingungsdämpferanordnung kann danach mit der Kupplungsnabe 34 über die Zentralschraube 272 verbunden werden, zuvor oder nachdem der Torsionsschwingungsdämpfer 252 mittels der Flexplatte 254 mit der Abtriebswelle 214 verbunden wird.

Alternativ kann auch schon der Torsionsschwingungsdämpfer 252 zum vormontierten Einbaumodul gehören, so dass ein weiterer Montageschritt eingespart werden kann.

Die Öffnungen 230 in der Getriebegehäusewandung geben den Vorteil, dass das Innere der Kupplungsgehäuseglocke besser gekühlt/gelüftet werden kann. Ferner können Zusatzgeräte von außen leicht montiert/demontiert werden.

Die Anordnung des Radialwellendichtrings 54 auf die in Fig. 2 gezeigte Art und Weise ermöglicht, dass dieser leicht getauscht werden kann, ohne dass das Kupplungsgehäuse 200 geöffnet (aufgestochen) werden muss. Es braucht nur die Zentralschraube 272 gelöst werden, so dass das Zwei-Massen-Schwungrad 252 entfernt werden kann und der Radialwellendichtring 54 damit zugänglich ist. Zur statischen Gehäusedichtung 222 ist noch zu erwähnen, dass diese nur einen kleinen Durchmesser aufweist und damit den Trockenraum in der Getriebegehäuseglocke 18 gegenüber dem vom Getriebegehäuse 200 definierten Nassraum zuverlässig und ohne großen Bauteileaufwand abdichtet.

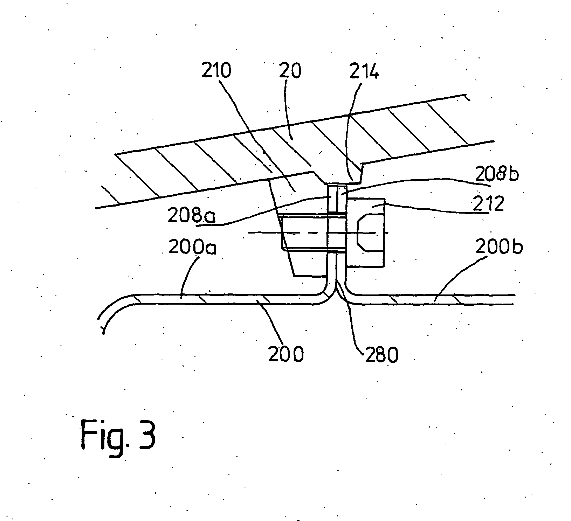

Bei der Konstruktion der Fig. 2 sind die beiden Gehäuse-Halbschalen 200a und 200b miteinander verschweißt. Die entsprechende Schweißnaht ist bei 276 angedeutet. Eine andere Möglichkeit der Verbindung der beiden Gehäuseschalen 200a und 200b ist in Fig. 3 veranschaulicht. Die beiden Halbschalen sind jeweils mit einem nach radial außen gebogenen Bund 208a beziehungsweise 208b ausgeführt, an dem die beiden Halbschalen miteinander verschraubt sind. Die entsprechende Verschraubung ist in Fig. 3 nicht dargestellt. Die miteinander verschraubten Bünde 208a und 208b übernehmen überdies die Funktion der Befestigungslasche 208 der Konstruktion der Fig. 2, dienen also zur Befestigung des Kupplungsgehäuses 200 an der Getriebewandung 20 unter Vermittlung der Befestigungsaugen 210 und der Schrauben 212. In der Regel wird es zweckmäßig sein, die Fügefläche 280 zwischen den beiden Bünden 208a und 208b mittels einer geeigneten Dichtungsanordnung oder Dichtmasse abzudichten.

Die in Fig. 3 gezeigte Ausführung des Gehäuses 200 bietet den Vorteil, dass die Doppelkupplung 12 etwa für Wartungsarbeiten oder Reparaturarbeiten zugänglich ist, ohne dass ein Aufstechen des Gehäuses 200 erforderlich ist. Es braucht nur die Verschraubung der beiden Halbschalen sowie gegebenenfalls die Verschraubung 212 gelöst werden, um die Halbschale 200b ablösen zu können und damit an die Doppelkupplung heranzukommen. So sind zumindest alle "losen" Komponenten der Doppelkupplung für einen Austausch erreichbar, ohne dass besondere Werkzeuge erforderlich wären. Etwaige Wartungs- beziehungsweise Reparaturarbeiten könnten damit sogar in einer normalen Service-Werkstatt durchgeführt werden. Ferner ergeben sich durch die lösbare Verbindung der Halbschalen 200a und 200b auch Vorteile im Hinblick auf ein Recycling der Komponenten.

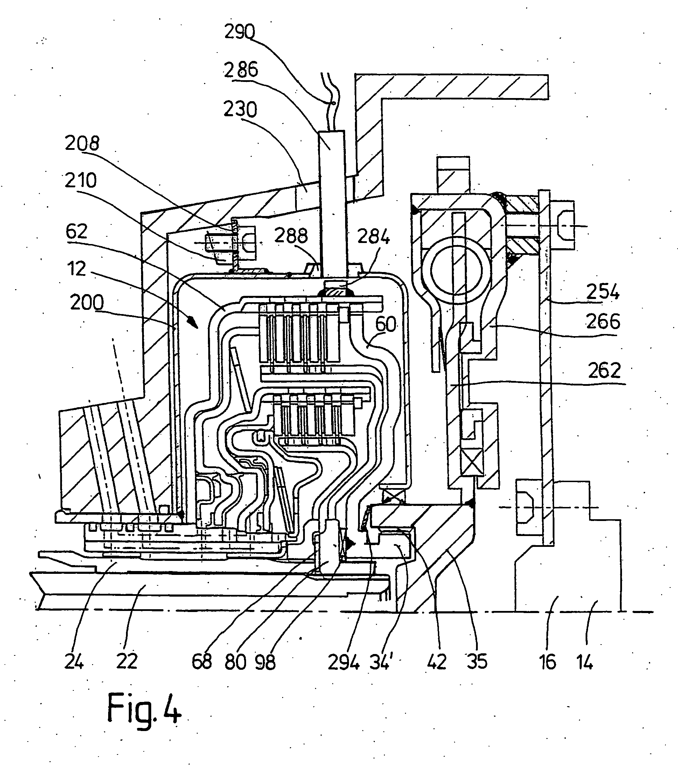

Fig. 4 zeigt ein Beispiel, bei dem auf der Primärseite der Doppelkupplung 12, nämlich außen am Außenlamellenträger 62, ein Inkrementgeberring 284 angeordnet ist, dem ein Sensor 286 zugeordnet ist, um beispielsweise die Drehzahl der Doppelkupplung zu erfassen. Der Sensor 286 ist durch die Öffnung 230 in der Getriebegehäusewandung 20 zum Kupplungsgehäuse 200 geführt und dort beispielsweise in eine Fassung 288 eingesetzt. Vermittels der Öffnung 230 kann der beispielsweise über ein Kabel 290 an einer Steuereinheit oder dergleichen angeschlossene Sensor 286 problemlos montiert und demontiert werden.

Bei der Konstruktion der Fig. 4 ist der Torsionsschwingungsdämpfer 252 mit einer Zentralnabe 35 ausgeführt, an der das Hohlrad 262 angeschweißt ist. Diese Zentralnabe 35 steht über eine Steckverzahnung 42 mit einem funktionsmäßig der Kupplungsnabe 34 entsprechenden Ringteil 34' in Drehmitnahmeeingriff, an dem der Mitnehmer 60 angeschweißt ist. Die Verzahnung befindet sich in der normalen Momentenflussrichtung von der Antriebseinheit zum Getriebe hinter dem Torsionsschwingungsdämpfer 252, so dass die Beanspruchung durch von der Antriebseinheit (gegebenenfalls Motor) kommende Torsionsschwingungen nicht kritisch ist. Axial wird die Doppelkupplung 12 wie bei der Konstruktion der Fig. 1 durch ein Gleitlager 98, die Nabe 80 und ein Gleitlager 68 an der radial äußeren Getriebeeingangswelle 24 abgestützt. In Richtung zur Antriebseinheit ist die Doppelkupplung 12 über den Mitnehmer 60 und eine Tellerfeder 294 an der Zentralnabe 35 und damit über den Torsionsschwingungsdämpfer 252 und die Flexplatte 254 an der Abtriebswelle 14 der Antriebseinheit abgestützt. Die Tellerfeder 294 bietet den Vorteil, dass axiale Stöße von der Antriebseinheit her, soweit diese überhaupt durch die Flexplatte 254 durchgelassen werden, durch die Tellerfeder 294 abgefangen beziehungsweise abgefedert werden und somit die Kupplungslager nicht übermäßig belastet werden. Wie schon erwähnt, ist die Steckverzahnung 42 in normaler Momentenflussrichtung hinter dem Torsionsschwingungsdämpfer 252 angeordnet und läuft überdies in Öl, so dass Verschleiß- und Geräuschprobleme kaum auftreten können.

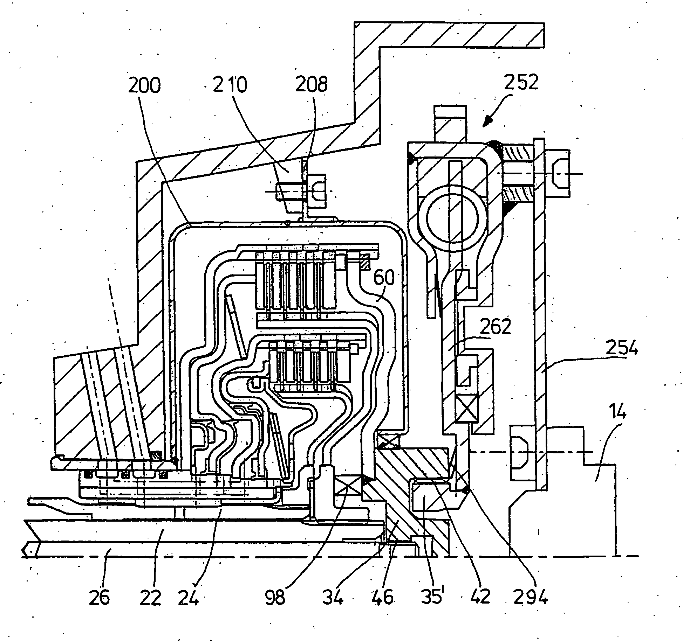

Fig. 5 zeigt eine Variante des Antriebssystems, bei der ähnlich wie bei der Konstruktion der Fig. 1 eine Steckverzahnung 44 zwischen der Kupplungsnabe 34 und einer Antriebswelle 26 einer mechanisch angetriebenen Pumpe vorgesehen ist. Die Kupplungsnabe 34 steht über eine Steckverzahnung 42 mit einem Ringteil 35' in Drehmitnahmeeingriff, an dem das Hohlrad 162 des Torsionsschwingungsdämpfers 252 angeschweißt ist. Ähnlich wie bei der Konstruktion der Fig. 5 ist eine Tellerfeder 294 vorgesehen, um axiale Stöße von der Abtriebswelle, gegebenenfalls Kurbelwelle 14, abzufangen beziehungsweise zu dämpfen.

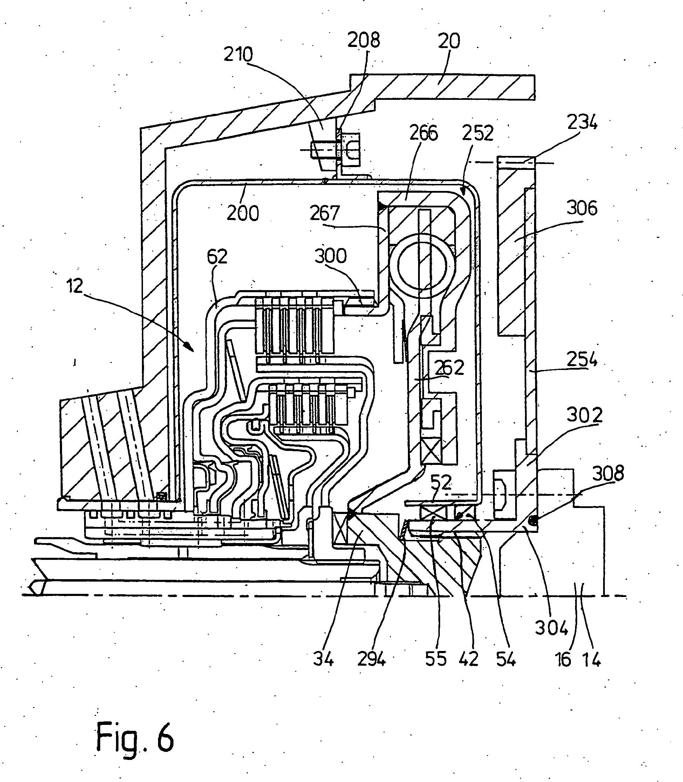

Bei der in Fig. 6 gezeigten Konstruktion ist das Zwei-Massen-Schwungrad 252 in den vom Gehäuse 200 begrenzten Nassraum aufgenommen. Hierzu ist das nunmehr der Eingangsseite des Torsionsschwingungsdämpfers zugeordnete Hohlrad 262 an der Kupplungsnabe 34 angeschweißt. Der nunmehr als Ausgangsseite des Torsionsschwingungsdämpfers dienende Planetenradträger 266 steht über ein Deckblech 267 und eine Steckverzahnung 300 mit dem Außenlamellenträger 62 in Drehmitnahmeeingriff.

An der Abtriebswelle 14 ist ein ringartiges Koppelelement 302 mit einem Koppelflansch 304 angebracht, der über eine Steckverzahnung 42 an der Kupplungsnabe 34 angekoppelt ist. Eine zwischen der Kupplungsnabe 34 und dem Koppelflansch 304 wirksame Tellerfeder 294 fängt axiale Stöße ab beziehungsweise dämpft diese zumindest. Das Koppelement 302 trägt über eine Flexplatte 254 eine Zusatzmasse 306, die zur Einstellung eines mit der Antriebseinheit verbundenen Massenträgheitsmoments dient und Drehungleichförmigkeiten der Antriebseinheit reduziert. Die Zusatzmasse 306 kann mit einem integrierten Zahnkranz 234 ausgeführt sein.

Das Gehäuse 200 ist über ein Radiallager 55 am Koppelflansch 304 gelagert, so dass die gegebenenfalls als Radialwellendichtring ausgeführte Dichtung 54 entlastet wird. Es wird durch das Radiallager 55 insbesondere erreicht, dass der radial innere Randabschnitt 52 und der Koppelflansch 304 trotz etwaiger Taumelbewegungen beziehungsweise Biegeverformungen der verschiedenen Wellen und Komponenten relativ zueinander keine übermäßigen Relativbewegungen zueinander ausführen, so dass die Dichtung 54 keinen übermäßigen Stauchbeanspruchungen ausgesetzt ist und keinen übermäßigen Radialversatz ausgleichen muss.

Der vom Gehäuse 200 begrenzte Nassraum ist zur Antriebseinheit hin ferner durch einen O-Ring 308 abgedichtet, der zwischen dem Koppelelement 302 und dem Koppelende 16 der Abtriebswelle 14 wirksam ist.

Durch die Integration des Zwei-Massen-Schwungrads 252 in den Nassraum können aufwendige Dichtmaßnahmen in Bezug auf diesen Torsionsschwingungsdämpfer entfallen. Ferner kann eventuell auf eine interne Schmierung des Zwei-Massen-Schwungrads durch Fett oder dergleichen verzichtet werden, da der ZMS-Torsionsdämpfer 252 im Nassraum zwangsläufig mit Kühlöl versorgt wird und so geschmiert und auch gekühlt wird. Auf diese Weise kann Verschleiß in Bezug auf den Torsionsschwingungsdämpfer reduziert und die Wirkung des Torsionsschwingungsdämpfers bei höheren Drehzahlen verbessert werden.

Durch die Anordnung des Torsionsschwingungsdämpfers 252 im Nassraum auf die in Fig. 6 gezeigte Art und Weise wird überdies erreicht, dass die Doppelkupplung 12 und der Torsionsschwingungsdämpfer 252 zusammen mit dem Gehäuse 200 ein Modul bilden können, das als vorgefertigtes Modul an einem Getriebe montierbar ist.

Beim vorliegenden Beispiel ist die das Antriebsmoment übertragende Steckverzahnung 42 in normaler Momentenflussrichtung vor dem Torsionsschwingungsdämpfer 252 angeordnet. Durch die Zusatzmasse 306 wird aber eine hohe primärseitige Drehmasse bereitgestellt, die Motorschwingungen zuverlässig reduziert, so dass die Steckverzahnung 42 keinen übermäßigen Belastungen ausgesetzt wird.

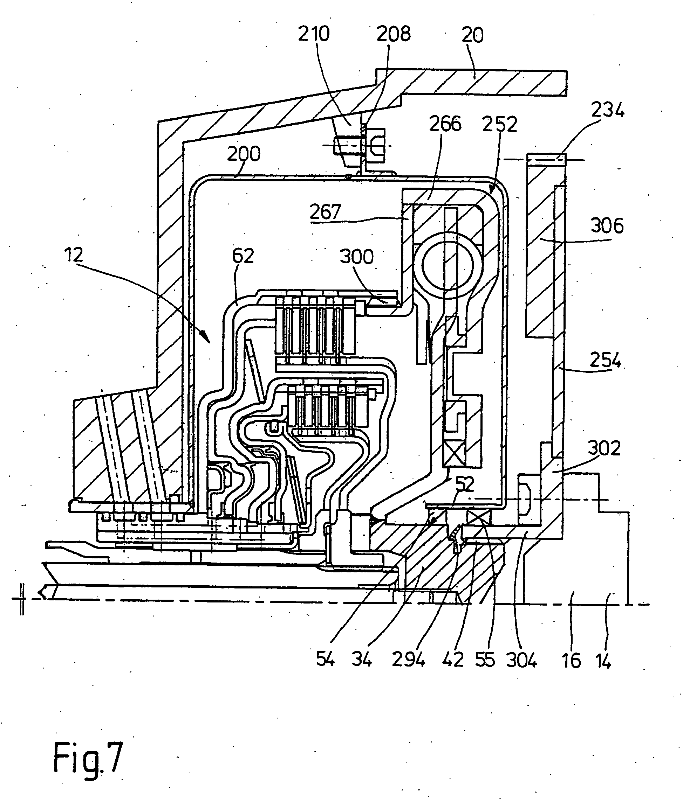

Fig. 7 zeigt eine Ausführungsvariante der Konstruktion der Fig. 6. Die Dichtung 54 (gegebenenfalls Radialwellendichtring 54) ist hier zwischen dem umgebogenen Randabschnitt 52 des Gehäuses 200 und der Kupplungsnabe 34 wirksam, so dass der O-Ring zwischen dem Koppelelement 302 und dem Koppelende 16 der Abtriebswelle 14 entfallen kann. Ansonsten entspricht die Konstruktion der Fig. 7 im Wesentlichen der Konstruktion der Fig. 6.

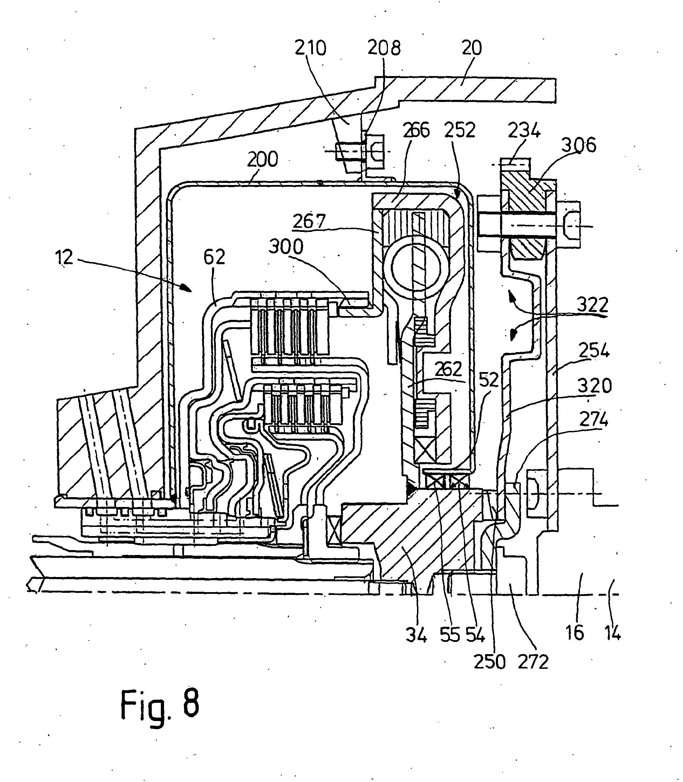

Das Antriebssystem der Fig. 8 ist hinsichtlich der Ausbildung der Doppelkupplung 12 und des Torsionsschwingungsdämpfers 252 und hinsichtlich der Integration des Torsionsschwingungsdämpfers 252 in eine diesen und die Doppelkupplung 12 umfassende Baueinheit sehr ähnlich zu den Konstruktionen der Fig. 6 und 7. Der axial umgebogene Rand 52 des Gehäuses 200 steht vorliegend über ein Radiallager 55 und eine Dichtung 54 mit der Kupplungsnabe 34 in Radial-Abstützungs-Eingriff und Dichtungseingriff. Die Ankopplung der Kupplungsnabe 34 an der Antriebswele 14 der Antriebseinheit erfolgt hier über zwei Flexplatten 254 und 320, die radial außen eine gegebenenfalls mit Zahnkranz 234 ausgeführte Zusatzmasse 306 tragen. Die Zusatzmasse 306 ist radial innen abgerundet ausgeführt, um Biegebewegungen der Flexplatten nicht zu behindern. Die Flexplatte 320 ist bei 322 mit radialelastischen Bereichen ausgeführt, so dass die Flexplatte auch in radialer Richtung flexibel ist. Von der Flexplatte 320 wird das Drehmoment über eine Hirth-Verzahnung 250 auf die Kupplungsnabe 34 übertragen, ähnlich wie bei der Konstruktion der Fig. 2. Ein radial innerer Koppelbereich der Flexplatte 320 ist hierzu vermittels einer Zentralschraube 272 und eines topfförmigen Elements 274 an der Kupplungsnabe 34 festgespannt.

Die Konstruktion der Fig. 8 bietet den Vorteil, dass vor allem durch die spezielle Ausgestaltung der Flexplatte 320, aber auch allein schon durch das Inreiheschalten von zwei Flexplatten Wellenversätze zwischen der Abtriebswelle 14 und den Getriebeeingangswellen besonders gut ausgeglichen werden können, wodurch die Koppelverzahnung, hier Hirth-Verzahnung, und die Dichtung 54 entlastet werden. Durch die Zusatzmasse 306 werden Drehungleichförmigkeiten der Antriebseinheit so weit abgemildert, dass die Hirth-Verzahnung 250 nicht insoweit nicht übermäßig belastet wird.

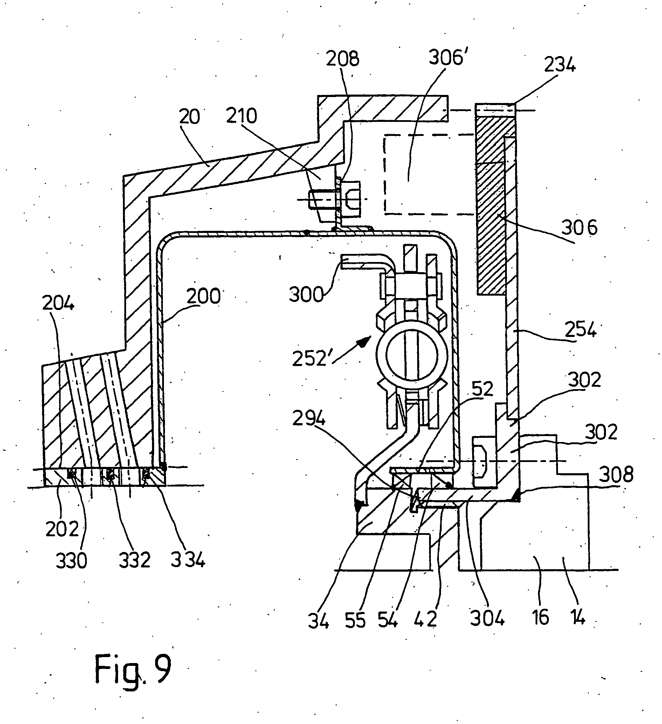

Bei der nur teilweise dargestellten Konstruktion der Fig. 9 ist anstelle eines Zwei-Massen-Schwungrads ein "konventioneller" Torsionsschwingungsdämpfer 252' in den vom Gehäuse 200 begrenzten Nassraum integriert. Die Ankoppelung der Ausgangsseite des Torsionsschwingungsdämpfers 252' erfolgt wie bei den Konstruktionen der Fig. 6 bis 8 durch eine Steckverzahnung 300. Der axial umgebogene Rand 52 des Gehäuses ist über ein Radiallager 55 an der Kupplungsnabe 34 gelagert und steht über die Dichtung 54 mit dem Koppelflansch 304 in Dichteingriff. Im Falle eines für Öl durchlässigen Radiallagers 55 wird somit die zwischen dem Koppelflansch 304 und der Kupplungsnabe 34 wirksame Steckverzahnung 42 mit Kühlöl versorgt und damit geschmiert, so dass einem Verschleiß der Verzahnung und der Entwicklung von Geräuschen entgegengewirkt wird. Ein Austritt von Öl zur Antriebseinheit hin wird durch den O-Ring 308 vermieden. Wie bei 306' gestrichelt angedeutet, sind verschiedene Ausgestaltungen der Zusatzmasse 306 insbesondere hinsichtlich deren wirksame Trägheitsmasse möglich, um verschiedenen Anforderungen gerecht zu werden.

In Fig. 9 ist noch dargestellt, wie die Lagerhülse 202 gegenüber dem die Aufnahme 204 aufweisenden Getriebegehäuseabschnitt durch drei statische Dichtringe 330, 332 und 334 abgedichtet sein könnte, so dass die den beiden Lamellen-Kupplungsanordnungen zugeordneten Hydrauliksystem-Anschlüsse zuverlässig voneinander isoliert sind.

Durch die Verwendung eines "konventionellen" Torsionsschwingungsdämpfers ohne zwei Schwungmassen wird für den Torsionsschwingungsdämpfer weniger radialer Bauraum benötigt, so dass beispielsweise mehr Platz für eine entsprechend größere Zusatzmasse 306 beziehungsweise 306' zur Verfügung steht. Ein "konventioneller" Torsionsschwingungsdämpfer ist überdies in der Regel kostengünstiger als ein Torsionsschwingungsdämpfer des Zwei-Massen-Schwungrad-Typs.

Auf Fig. 10 wurde schon Bezug genommen. Die Konstruktion der Fig. 10 entspricht hinsichtlich der Anordnung der Doppelkupplung und des Torsionsschwingungsdämpfers im Wesentlichen der Konstruktion der Fig. 2, wobei die Doppelkupplung nicht dargestellt ist. Das Kupplungsgehäuse 200 ist mit wenigstens einer Abflussleitung 240 ausgeführt, die vom Gehäuse 200 aufgefangenes, und in einem unteren Bereich gesammeltes Kühlöl abführt, beispielsweise in den Getriebesumpf oder zu einer Kühlölpumpe. Die Abflussleitung 240 kann, wie dargestellt, von einer Kühlwendel 242 umringt sein, so dass das abfließende Öl gekühlt werden kann. Eine andere Möglichkeit wäre, die Abflussleitung selbst als Kühlwendel auszuführen.

Ein wesentlicher Vorteil aller gezeigten Konstruktionen gemäß Fig. 2 bis Fig. 10 ist, dass der Bauraum in der Getriebegehäuseglocke außerhalb des Kupplungsgehäuses 200 genutzt werden kann, um zusätzliche Komponenten aufzunehmen, z. B. eine Ölpumpe, Steuergeräte, Ventile usw.. Ferner kann die Getriebegehäuseglocke (Kupplungsglocke) mit Öffnungen ausgeführt sein, so dass einerseits eine bessere Kühlung und Lüftung erreicht wird und andererseits gegebenenfalls vorgesehene Zusatzkomponenten besser zugänglich sind.

Durch einen Verzicht einer axialen Abstützung der Doppelkupplung beziehungsweise der die Doppelkupplung und gegebenenfalls den Torsionsschwingungsdämpfer umfassenden Baueinheit an der von dem Getriebeeingangswellen gebildeten Getriebewellenanordnung in Richtung zur Antriebseinheit hin, beispielsweise vermittels eines Sicherungsrings in der Art des Sicherungsrings 96 der Konstruktion der Fig. 1, kann die betreffende Baueinheit im vollständig vormontierten Zustand getriebeseitig montiert werden, da nach Aufschieben der Baueinheit auf die Getriebeeingangswellen nicht noch ein derartiger Sicherungsring an einer der Getriebeeingangswellen befestigt werden muss. Die vormontierte Baueinheit kann deshalb auch Komponenten wie die Kupplungsnabe 34 samt dem Mitnehmer 60 beziehungsweise dem integrierten Torsionsschwingungsdämpfer umfassen, ohne dass es erforderlich wäre, nach getriebeseitiger Montage dieser Baueinheit diese Komponenten wieder zu demontieren, um noch einen Sicherungsring der genannten Art oder sonstige Sicherungsmittel an einer der Getriebeeingangswellen zu montieren. Dem Verzicht auf eine axiale Abstützung der Baueinheit an der Getriebewellenanordnung in Richtung zur Antriebseinheit hin liegt die Erkenntnis zugrunde, dass im fertig zusammengefügten Antriebsstrang die Abstützung dieser Baueinheit in Richtung zur Antriebseinheit letztlich an der Antriebseinheit selbst beziehungsweise deren Abtriebswelle erfolgen kann, gegebenenfalls unter Vermittlung des zwischen der Doppelkupplung und der Antriebseinheit angeordneten Torsionsschwingungsdämpfers beziehungsweise einer die Eingangsseite der Kupplungseinrichtung mit der Abtriebswelle verkoppelnden Koppelanordnung.

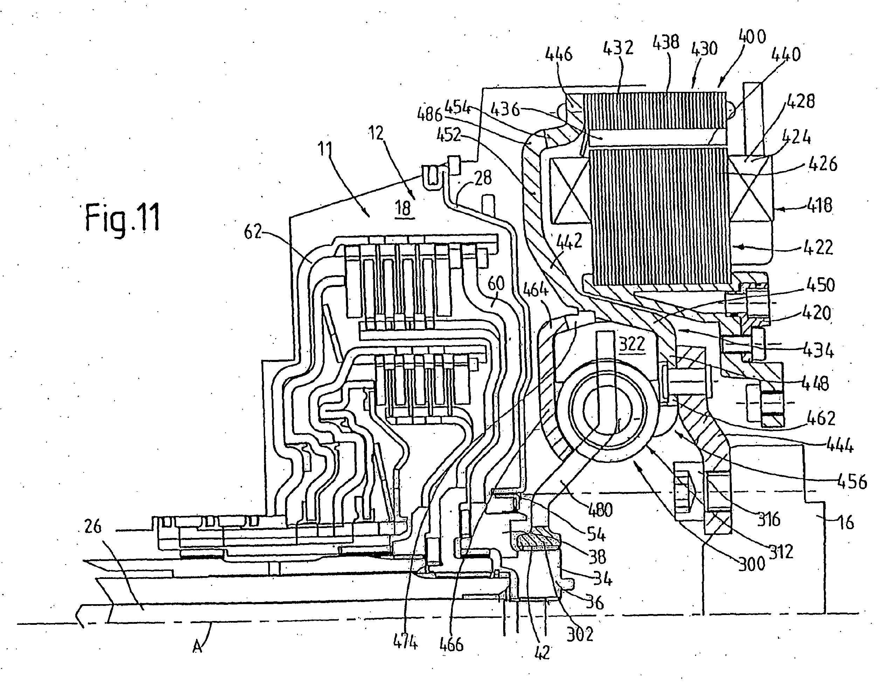

Ein weiteres Antriebssystem ist in Fig. 11 gezeigt. Die Doppelkupplung entspricht im Wesentlichen der Doppelkupplung der Fig. 1 und ist mit einer zweiteiligen, die Teile 36 und 38 aufweisenden Kupplungsnabe 34 ausgeführt.

Das Antriebssystem 11 umfasst neben der Doppelkupplung 12 ferner einen Torsionsschwingungsdämpfer 300 und eine allgemein mit 400 bezeichnete Elektromaschine, beispielsweise ein sogenannter Kurbelwellenstartergenerator. Die Elektromaschine 400 weist eine Statoranordnung 418 auf, die beispielsweise auf einem Statorträger 420 an einem nicht dargestellten Motorblock oder dergleichen getragen sein kann. Die Statoranordnung 418 umfasst einen Statorwechselwirkungsbereich 422 mit einer Mehrzahl von Statorwicklungen 424 und ein Joch bildenden Blechpaketen 426. Die Wicklungsköpfe 428 der Wicklungen 24 stehen seitlich über die Blechpakete 26 über. Die Elektromaschine 400 umfasst ferner eine Rotoranordnung 430 mit einem Rotorwechselwirkungsbereich 432 und einer nachfolgend noch detaillierter beschriebenen Trägeranordnung 434. Der Rotorwechselwirkungsbereich 432 umfasst eine Mehrzahl von an dessen Innenseite getragenen Permanentmagneten 436 sowie Blechpakete 438, die ein Joch des Rotorwechselwirkungsbereichs 432 bilden. Zwischen den Permanentmagneten 36 und dem Statorwechselwirkungsbereich 422 ist ein Luftspalt 440 gebildet, der zum Erhalt einer bestmöglichen Effizienz der Elektromaschine 400 so klein als möglich sein sollte.

Die Trägeranordnung 434 umfasst zwei Trägerelemente 442, 444. Das erste Trägerelement 442, das radial außen mit einem im Wesentlichen sich radial erstreckenden Abschnitt 446 den Rotorwechselwirkungsbereich 432 trägt, ist in einem radial weiter innen liegenden, sich ebenfalls im Wesentlichen radial erstreckenden Abschnitt 448 mit dem zweiten Trägerteil 444 durch eine Mehrzahl von in Umfangsrichtung aufeinander folgenden Nietbolzen oder dergleichen verbunden.

Radial außen anschließend an den sich im Wesentlichen radial erstreckenden Abschnitt 448 weist das erste Trägerelement 442 einen sich in Richtung der Drehachse A und geringfügig nach radial außen erstreckenden Verbindungsabschnitt 450 auf, welcher sich mit dem Statorwechselwirkungsbereich 422 in Achsrichtung überlappt bzw. diesen axial überbrückt. An diesen Verbindungsabschnitt 450 anschließend weist das erste Trägerelement 442 einen sich im Wesentlichen wieder nach radial außen erstreckenden Abschnitt 452 auf, der nach radial außen hin die Wicklungsköpfe 428 überbrückt und in einen sich im Wesentlichen in axialer Richtung erstreckenden, und die Wicklungsköpfe 28 zumindest teilweise in Axialrichtung überbrückenden Abschnitt 454 übergeht, an den sich der im Wesentlichen radial erstreckende Abschnitt 446 anschließt.

Als Primärseite 456 des Torsionsschwingungsdämpfers 300 dient der sich im Wesentlichen radial erstreckende Abschnitt 448 des ersten Trägerelements 442, der einen ersten Deckscheibenbereich 462 der Primärseite bildet. Ein zweiter Deckscheibenbereich 464 der Primärseite ist beispielsweise von einem gesonderten, beispielsweise aus Blech gestanzten und geeignet geformten Element gebildet, das einen sich im Wesentlichen radial erstreckenden Abschnitt 466 aufweist, der in Achsrichtung im Wesentlichen dem Abschnitt 448 des ersten Deckscheibenbereichs 462 gegenüberliegt. Der zweite Deckscheibenbereich 464 könnte grundsätzlich aber auch von in dem ersten Trägerelement 442 definierten und aus diesen entsprechend herausgedrückten Zungenabschnitten oder dergleichen gebildet sein. Handelt es sich um ein gesondertes Blechteil, kann dieses am ersten Trägerelement 442 angeschweißt sein. Auch eine formschlüssige Rastverbindung oder dergleichen ist denkbar.

Um Abrieb der Gleitelementanordnung 322 nach radial außen abgeben zu können, sind Partikelabgabeöffnungen 474 im Übergangsbereich zwischen dem zweiten Deckscheibenbereich 64 und dem Verbindungsabschnitt 450 sowie Partikelabgabeöffnungen 486 im Übergangsbereich zwischen den Abschnitten 452 und 454 vorgesehen.

Als Sekundärseite dient ein Zentralscheibenelement 480, das ein Nabenteil 302 aufweist, das mit einer Innenverzahnung ausgeführt ist, die in die Außenverzahnung 42 eingreift und so die Sekundärseite des Torsionsschwingungsdämpfers 300 an der Eingangsseite der Doppelkupplung 12 ankoppelt. Auf an sich bekannte Weise stützen sich die Dämpferelemente, beispielsweise Dämpferfedern, der Dämpferelementenanordnung 312 einerseits an der Primärseite, beispielsweise an an den Abschnitten 448, 464 und ggf. 450 gebildeten axialen bzw. radialen Ausbauchungen, und andererseits an der Sekundärseite, beispielsweise an Radialstegen des Zentralscheibenelements 480 ab, wobei Federteller als Abstützelemente zur besseren Druckverteilung vorgesehen sein können.

Zu näheren Einzelheiten der Ausbildung der Elektromaschine 400 und des Torsionsschwingungsdämpfers 300 wird auf die deutsche Patentanmeldung Az. 100 06 646.1 vom 15.02.2000 verwiesen.

Das Antriebssystem 11 der Fig. 11 zeichnet sich dadurch aus, dass eine Funktionsintegration für die Elektromaschine und den Torsionsschwingungsdämpfer 300 realisiert ist. Dadurch, dass das erste Trägerelement 442 wenigstens den ersten Deckscheibenbereich 462 der Primärseite bildet, wird die Teilevielfalt reduziert und Bauraum eingespart. Dabei wird eine optimale Raumausnutzung dadurch erreicht, dass der Torsionsschwingungsdämpfer 300 im Wesentlichen radial innerhalb der Statoranordnung 418 angeordnet ist. Die Rotoranordnung 430 bildet eine Primärmasse für den Torsionsschwingungsdämpfer 300, während das Zentralscheibenelement 480 samt den daran angekoppelten Komponenten der Doppelkupplung 12 gewissermaßen eine Sekundärmasse des Torsionsschwingungsdämpfers 300 bildet. Insbesondere der Außenlamellenträger 62 und die daran angeordneten Außenlamellen weisen eine nennenswerte sekundärseitige Trägheitsmasse auf.

Das Antriebssystem der Fig. 11 zeichnet sich, wie schon erwähnt, dadurch aus, dass es durch eine teilemäßige Verschmelzung der Elektromaschine 400 und des Torsionsschwingungsdämpfers 300 nur sehr wenig Bauraum beansprucht. Die Trägeranordnung 434 der Rotoranordnung 430 bildet einen der Kraftabstützung dienenden Bereich des Torsionsschwingungsdämpfers 300, so dass hier beispielsweise auf ein vollständiges separates Deckscheibenelement oder dergleichen verzichtet werden kann. Des Weiteren liegt insbesondere der Bereich 448, 450 der Trägeranordnung 434, welcher den Deckscheibenbereich 462 der Primärseite bildet, im Wesentlichen radial innerhalb der Statoranordnung 418 der als Außenläufermaschine ausgebildeten Elektromaschine 400. Durch die zusätzlich noch vorhandene zumindest teilweise axiale Überlappung der Elektromaschine 400, d. h. insbesondere der Statoranordnung 418 derselben, mit dem Torsionsschwingungsdämpfer 300 bzw. desses Dämpferelementenanordnung 312 wird der in Anspruch genommene Bauraum weiter minimiert.

Der Konstruktion der Fig. 11 liegt folgendes Grundkonzept zugrunde: Die Elektromaschine (Kurbelwellenstartergenerator) und der Torsionsschwingungsdämpfer 300 sind radial ineinander geschachtelt, während die Doppelkupplung axial benachbart dazu angeordnet ist. Der Außendurchmesser der Elektromaschine ist größer als der Außendurchmesser der Doppelkupplung 412, wodurch im Falle einer dem Normalfall entsprechenden kegelförmigen Getriebeglockenausbildung (motorseitig größerer Innendurchmesser, getriebeseitig kleinerer Innendurchmesser) eine optimale Bauraumausnutzung erreicht wird. Die Doppelkupplung liegt mit ihren Lamellen-Kupplungsanordnungen etwa im gleichen Radialbereich bzw. radial außerhalb des Torsionsschwingungsdämpfers.

Gemäß der gezeigten Konstruktion ist der Torsionsschwingungsdämpfer 300 für einen trocken laufenden Betrieb vorgesehen, er kann aber auch mit wenigstens einer Kammer für die Dämpferelementenanordnung ausgeführt sein, um einen nasslaufenden Betrieb ähnlich wie bei einem Zwei-Massen-Schwungrad zu ermöglichen.

Wie beim Ausführungsbeispiel der Fig. 5 sind die Ölpumpe und der dort mit 252 bezeichnete Torsionsschwingungsdämpfer 300 in Reihe geschaltet, so dass nicht nur die Doppelkupplung 12, sondern auch die Ölpumpe schwingungsgedämpft über den Torsionsschwingungsdämpfer 300 angetrieben wird.

Die Montage erfolgt bevorzugt auf folgende Weise: Eine erste, von der Statoranordnung 418 und dem Statorträger 420 gebildete Einheit und eine zweite, von der Rotoranordnung 430 und der Trägeranordnung 434 und dem Torsionsschwingungsdämpfer 300 gebildete zweite Einheit werden jeweils als vormontierte Einheit an der Antriebseinheit montiert. Ebenso wird die Doppelkupplung 12 als vormontierte Einheit am Getriebe in der Getriebeglocke 18 montiert und der Deckel 28 unter Anordnung des Radialwellendichtrings 54 zwischen dem radial inneren Flansch des Deckels und der Kupplungsnabe 36 in Stellung gebracht. Danach werden das Getriebe und die Antriebseinheit zusammengefügt, wobei die Innenverzahnung des Nabenteils 302 der Sekundärseite und die Außenverzahnung 42 der Kupplungsnabe 34 in gegenseitigen Eingriff gebracht werden.

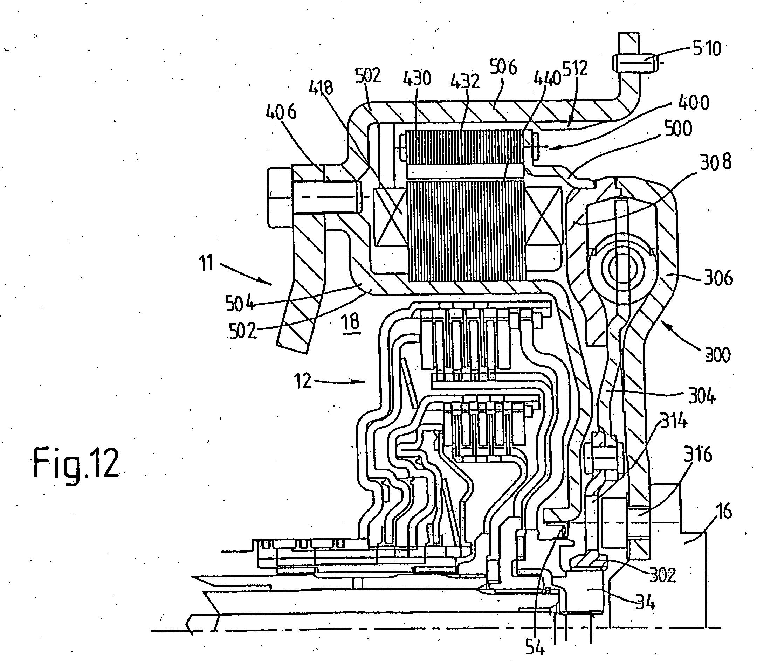

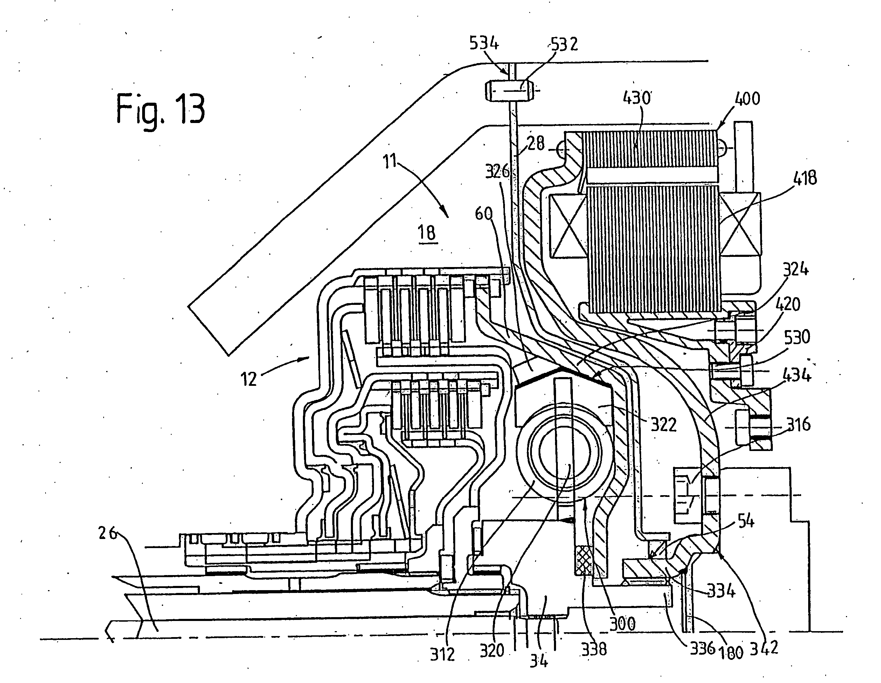

Das Antriebssystem 11 der Fig. 12 entspricht hinsichtlich der Doppelkupplung 12 und dem Torsionsschwingungsdämpfer 300 im Wesentlichen dem Ausführungsbeispiel der Fig. 13 der deutschen Patentanmeldung 100 34 730.4 vom 17.07.2000. Auf einen Anlasserzahnkranz 310 ist beim gezeigten Ausführungsbeispiel aber verzichtet. Statt dessen weist das Antriebssystem 11 eine beispielsweise als Kurbelwellenstatorgenerator dienende Elektromaschine 400 auf, deren Rotoranordnung 430 mittels einem Tragring oder Tragelementen 500 an der von den Deckblechen 306, 308 gebildeten Primärseite des Torsionsschwingungsdämpfers 300 gehalten ist. Ein am Getriebe angebrachter Statorträger 502, beispielsweise ein Guss- oder Ziehteil, trägt die radial außerhalb der Doppelkupplung 12 angeordnete Statoranordnung 418. Der Statorträger weist einen radial unteren Abschnitt 504 und einen radial oberen Abschnitt 506 auf, zwischen denen die Statoranordnung 418 und die Rotoranordnung 430 angeordnet sind. Der mit 406 bezeichnete Fügespalt zwischen dem Statorträger 502 und der Getriebegehäuseglocke ist abgedichtet. Ferner ist ein Radialwellendichtring 54 zwischen der Kupplungsnabe 34 und einem radial inneren Flasch des Statorträgers 502 wirksam. Der Statorträger 502 ersetzt somit den Deckel 28 des Ausführungsbeispiels der Fig. 1 und begrenzt den die Doppelkupplung aufnehmenden Aufnahmeraum 18, der als Nassraum dient.

Der Statorträger 502 kann über Passstifte 510 an der Antriebseinheit (Motor) zentriert sein und kann an der Antriebseinheit angeschraubt sein. Das Getriebegehäuse kann an der Antriebseinheit oder/und am Statorträger befestigt sein, und zwar radial innerhalb oder/und radial außerhalb des Luftspalts 440 der Elektromaschine 400.

Die Montage der Antriebseinheit 11 der Fig. 12 erfolgt am besten auf folgende Weise: Der Torsionsschwingungsdämpfer 300 samt der Rotoranordnung 430 wird an der Kurbelwelle anmontiert. Es wird dann der Statorträger 502 samt der Statoranordnung 418 an der Antriebseinheit montiert, wofür der Statorträger eine Führungsschiene 512 aufweist, die über die Rotoranordnung 430 gleitet. Unabhängig davon wird die Doppelkupplung 12 in die Gehäuseglocke des Getriebes eingesetzt. Danach werden das Getriebe und die Antriebseinheit (der Motor) zusammengefügt, wobei einerseits die den Torsionsschwingungsdämpfer mit der Doppelkupplung verkoppelten Verzahnungen in gegenseitigen Eingriff gebracht werden und andererseits der Radialwellendichtring 54 ordnungsgemäß zwischen dem inneren Flansch des Statorträgers 502 und der Kupplungsnabe 34 angeordnet wird.

Es wird noch darauf hingewiesen, dass beim gezeigten Beispiel die Verzahnung zwischen dem Nabenteil 302 und der Kupplungsnabe 34 radial innerhalb der Kurbelwellenschrauben 316 angeordnet ist, um die radiale Abmessung der Kupplungsnabe 34 und dementsprechend der Durchmesser des Radialwellendichtrings 54 vergleichsweise klein zu halten, so dass Reibungsverluste und der Verschleiß des Radialwellendichtrings minimiert werden.

Eine andere Möglichkeit für die Montage ist, dass der Torsionsschwingungsdämpfer 300 samt der Rotoranordnung 430 und der Statoranordnung 418 einschließlich dem Statorträger 502 als vormontierte Einheit an der Kurbelwelle bzw. dem Motorblock angeschraubt werden, wobei eine radiale Verriegelung der Rotoranordnung 430 einerseits und der Statoranordnung 418 andererseits vorteilhaft vorgesehen werden könnte. In Abweichung von der gezeigten Ausführungsform müsste der Innendurchmesser des Radialwellendichtrings bzw. dessen Sitz am Statorträger 502 radial außerhalb der Kurbelwellenverschraubung 316 liegen, um das erste Deckblech 306 am Koppelende 16 der Kurbelwelle anbringen zu können (andernfalls wären die Schrauben 316 nicht zugänglich). Unabhängig hiervon wird die Doppelkupplung 12 am Getriebe montiert. Anschließend werden das Getriebe und die Antriebseinheit zusammengefügt mit Verschraubung des Getriebes am Statorträger 502.

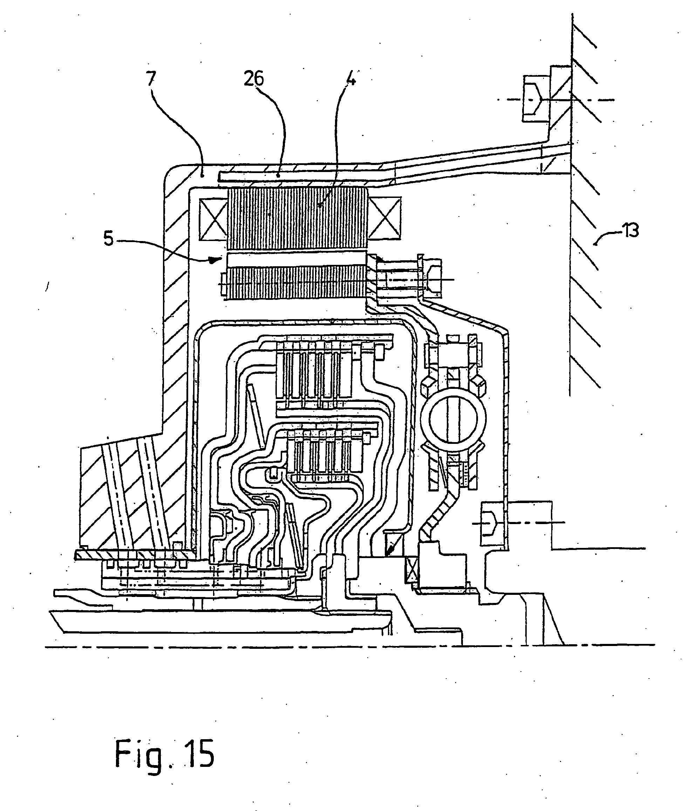

Das Beispiel der Fig. 13 entspricht hinsichtlich der Doppelkupplung 12 und der Integration des Torsionsschwingungsdämpfers 300 darin im Wesentlichen dem Ausführungsbeispiel der Fig. 15 der genannten Anmeldung 100 34 730.4, so dass auf die dortigen Ausführungen zu dieser Figur verwiesen werden kann. Erwähnt werden sollte noch, dass die Gleitelemente und Federschuhe 322 in einer Gleitschale 530 geführt sind, um die bei Relativverdrehungen zwischen der Kupplungsnabe 34 und dem Momentenübertragungsglied 60 im Torsionsschwingungsdämpfer auftretende Reibung zu minimieren. Anstelle der Flexplatte 332 ist eine Trägeranordnung 434, an der Kurbelwelle angeschraubt, die die Rotoranordnung 430 einer Elektromaschine 400 trägt. Die Elektromaschine 400 entspricht der Elektromaschine 400 der Fig. 20, wenn man davon absieht, dass gemäß Fig. 13 der Torsionsschwingungsdämpfer 300 nicht mit der Elektromaschine integriert ist, sondern in die Doppelkupplung 12 integriert ist. Die Trägeranordnung 434 erfüllt also nur noch insoweit eine Doppelfunktion, als dass sie einen Koppelflansch 334 aufweist, der über Verzahnungen mit dem Koppelflansch 336 der Kupplungsnabe 34 koppelt. Auch beim Ausführungsbeispiel der Fig. 13 ist der Torsionsschwingungsdämpfer 300 radial innerhalb der Statoranordnung 418 angeordnet und überlappt sich teilweise axial mit dieser.

Erwähnt werden sollte noch, dass bei 342 ein O-Ring vorgesehen seien könnte, insbesondere wenn auf das eingeschweißte Dichtblech 180 verzichtet wird.

Der Deckel 28 ist mittels Passstiften 532 am Getriebe zentriert und in einen Fügespalt zwischen Getriebe und Antriebseinheit aufgenommen. Zum Getriebe hin ist der Fügespalt bei 534 abgedichtet, so dass der als "äußerer Nassraum" dienende Aufnahmeraum hinreichend zur Antriebseinheit hin abgedichtet ist.

Es soll noch auf folgende Möglichkeiten hingewiesen werden: Beim gezeigten Ausführungsbeispiel ist die Dichtscheibe 180 am Koppelflansch 334 angeschweißt. Sie könnte aber auch eingeklipst sein. Die Gleitschale 530 braucht nicht zwingend mit Gleitelementen und dergleichen kombiniert sein, die Dämpfungselemente, insbesondere Dämpferfedern, können auch direkt in die Gleitschale aufgenommen sein. Betreffend den zwischen dem Deckel 28 und dem Koppelflansch 334 angeordneten Radialwellendichtring wurde bei der in Fig. 13 gezeigten Ausführungsform der Durchmesser sehr gering gehalten; dieser liegt noch innerhalb der Kurbelwellenschrauben 316. Hierdurch werden Reibungsverluste und Verschleiß am Radialwellendichtring minimiert. Wie schon erwähnt wurde, dient der Träger 434 für die Rotoranordnung 430 gleichzeitig als Abtriebselement zur Ankopplung der Eingangsseite der Doppelkupplung, die der Primärseite des Torsionsschwingungsdämpfers entspricht. Unter Vermittlung der Kupplungsnabe 34 ist auch die Antriebswelle 26 der Ölpumpe an diesem Abtriebselement angekoppelt, wobei der Momentenfluss zur Pumpe nicht über den Torsionsschwingungsdämpfer verläuft.

Die Montage des Antriebssystems 11 in einem Antriebssstrang kann zweckmäßig beispielsweise auf folgende Weise erfolgen: Es wird die Statoranordnung 418 am Motorblock montiert. Anschließend wird der Rotorträger 434 samt der daran angebrachten Rotoranordnung 430 an der Kurbelwelle montiert. Anschließend wird das Dichtblech 28 mit dem Radialwellendichtring 54 in Stellung gebracht und am Motor montiert. Unabhängig davon wird die Doppelkupplung 12 mit dem darin integriertem Torsionsschwingungsdämpfer 300 als vormontierte Einheit am Getriebe in der Getriebeglocke montiert. Schließlich werden das Getriebe und der Motor zusammengefügt unter Herstellung der Drehmitnahmeverbindung zwischen den Koppelflanschen 334 und 336.

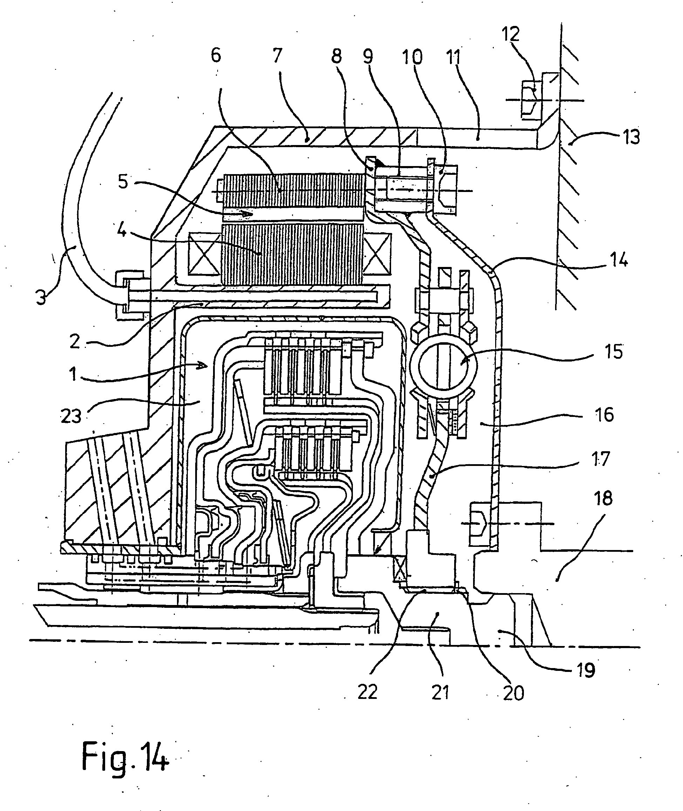

Es wird im Folgenden auf die Fig. 14 und 15 Bezug genommen, deren Bezugszeichen unabhängig von den Bezugszeichen der vorangehend beschriebenen Ausführungsbeispiele sind.

Fig. 14 zeigt eine Doppelkupplung 1 mit feststehendem, glockenartigen Gehäuse in der Art des Ausführungsbeispiels der Fig. 2. Die Doppelkupplung samt dem Gehäuse ist radial innerhalb der Elektromaschine 5 angeordnet. Der Torsionsschwingungsdämpfer 15 befindet sich im Trockenraum 16. Der Statorträger 2 ist Teil des Getriebegehäuses 7 und verfügt über Kühlkanäle für die Kühlung des Stators 4. Die Kühlkanäle können über Schläuche 3 an den Kühlkreislauf der Antriebseinheit (insbesondere des Verbrennungsmotors) angeschlossen sein. Es ist aber auch ein eigener Kühlkreislauf für den Stator möglich.

Bei dem hier gezeigten Kurbelwellenstartergenerator 5 handelt es sich um einen Außenläufer. Der Rotor 6 des Generators 5 ist mit dem Abdeckblech 8 des Torsionsschwingungsdämpfers 15 verbunden und ist über eine Flexplatte 14 an der Kurbelwelle 18 drehfest angebunden.

Die Montage der Antriebseinheit kann wie folgt erfolgen: Es wird die Flexplatte 14 an der Kurbelwelle 18 angeschraubt. Der Stator 4 wird auf dem Statorträger 2 befestigt. Die als vorgefertigtes Modul angelieferte Doppelkupplung mit ihrem feststehenden Gehäuse wird ins Getriebe gesteckt. Der Torsionsschwingungsdämpfer 15 mit dem Rotor 6 wird über die Verzahnung 22 mit dem Flansch 21 der Kupplungsnabe in Verbindung gebracht und Omittels eines Sicherungsrings 20 axial gesichert.

Für den Fall, dass die Flexplatte 14 als Zentrierung für den Rotor 6 und für die Gewährleistung eines den Toleranzen entsprechenden Luftspalts im Startergenerator nicht ausreicht, könnte anstelle einer Flexplatte auch eine steifere Mitnehmerscheibe eingesetzt werden.

Durch die Vormontage der Doppelkupplung, des Torsionsschwingungsdämpfers und des Startergenerators im Getriebe erhält man ein vollständiges Getriebemodul. Beim Zusammenfügen des Antriebsstrangs, also beim Montieren des Getriebes an der Antriebseinheit, dient ein Führungszapfen 19 an der Kupplungsnabe im Zusammenwirken mit einer zugeordneten Ausnehmung im Koppelende der Kurbelwelle als Zentrierung. Das Getriebegehäuse 7 wird dann über Schrauben 12 am Motorgehäuse 13 befestigt.

Die Schrauben 10 zur Anbindung des Rotors an der Flexplatte 14 und somit an der Kurbelwelle 18 können über eine Öffnung 11 im Getriebegehäuse oder - alternativ - über eine nicht dargestellte Öffnung im Motorgehäuse, angezogen werden.

Fig. 15 zeigt eine Ausführungsvariante des Antriebssystems der Fig. 14. Der Kurbelwellenstartergenerator 5 ist hier als Innenläufer ausgeführt. Der Stator 4 ist direkt am Getriebegehäuse 7 befestigt, wodurch eine bessere Kühlung des Statorträgers bzw. des Stators 4 erreicht wird. Zusätzlich können auch noch Kühlkanäle 26 im Getriebegehäuse 7 vorgesehen sein, die beispielsweise an den Kühlkreislauf der Antriebseinheit angeschlossen sind. Die Montage des Getriebemoduls (Doppelkupplung, Torsionsschwingungsdämpfer und CSE) und die Montage des Getriebes an der Antriebseinheit kann so erfolgen, wie es vorangehend im Zusammenhang mit der Fig. 14 beschrieben wurde.

Zur Fig. 14 ist nachzutragen, dass der vom Gehäuse definierte Nassraum mit 23 bezeichnet ist und dass 17 eine Mitnehmerscheibe des Torsionsschwingungsdämpfers 15 bezeichnet.

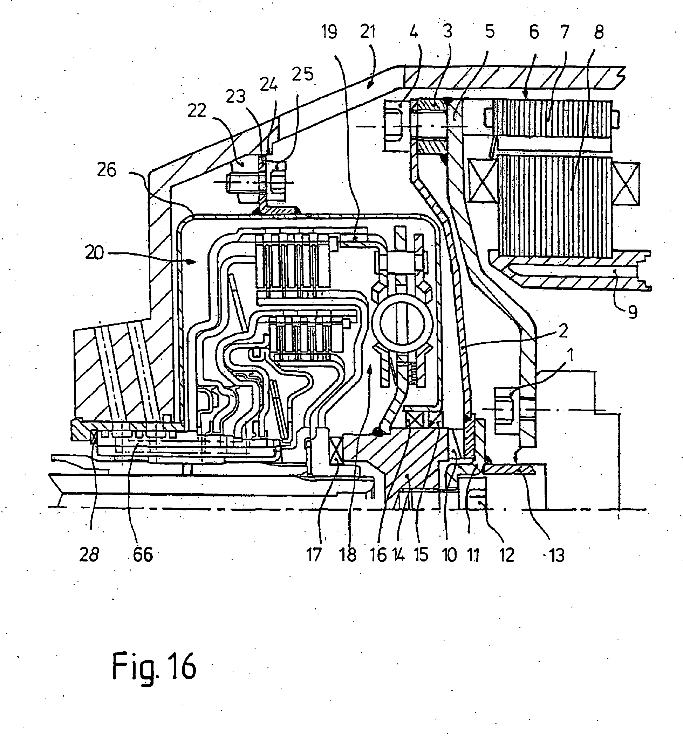

Bezug nehmend auf die Fig. 16 bis 19 werden weitere Ausführungsbeispiele von Antriebssystemen umfassend eine Doppelkupplung mit feststehendem Getriebegehäuse, einem Torsionsschwingungsdämpfer und einer Elektromaschine erläutert, wobei für die Fig. 16 bis 19 eigene Bezugszeichen unabhängig von den Bezugszeichen der vorangehend beschriebenen Ausführungsbeispiele verwendet wurden.

Zur Ausbildung der Doppelkupplung mit dem glockenartigen, feststehenden Gehäuse 26 wird auf die oben beschriebenen Ausführungsbeispiele der Fig. 2 bis 10 verwiesen. Gemäß der Konstruktion der Fig. 16 geht der Drehmomentfluss von der Kurbelwelle auf den Rotorträger 5, über die Verschraubung 3, 4 auf eine Flexplatte 2, über eine Hirth-Verzahnung 10 auf die auch als Zentralnabe bezeichenbare Kupplungsnabe 14 und dann über den Torsionsschwingungsdämpfer 18 auf den Außenlamellenträger der radial äußeren Lamellen-Kupplungsanordnung der Nasslauf-Doppelkupplung 20.

Das Getriebegehäuse verfügt über Ausnehmungen 21, durch welche zum einen die Verschraubungen 3, 4 und zum anderen die Verschraubungen 22, 23, 24 zugänglich sind.

Gemäß Fig. 16 ist die Elektromaschine 6 als Außenläufer ausgeführt. Der Stator 8 ist mit dem Motorgehäuse verbunden. Zur Statorkühlung (Kanäle 9) kann der Motorkühlkreislauf verwendet werden. Es ist aber auch möglich, einen separaten Kühlkreislauf vorzusehen, der beispielsweise von radial außen angeschlossen wird.

Der Rotor 7 ist, wie schon angedeutet, über einen Rotorträger 5 mit der Kurbelwelle verbunden, so dass der Motor unter Vermittlung der als Kurbelwellenstartergenerator dienenden Elektromaschine gestartet werden kann.

Die Montage kann wie folgt erfolgen: Das gesamte Modul, bestehend aus der Doppelkupplung 20, dem Torsionsschwingungsdämpfer 18, der Ölzufuhrnabe 66, dem Gehäuse 26 und der Flexplatte 2 wird als Einheit am Getriebe befestigt, gegebenenfalls über die Schrauben 25 oder über Schnapphaken, die zwischen der Lagerhülse des Kupplungsgehäuses und dem Getriebegehäuse wirksam sind. Der Kurbelwellenstartergenerator 6 wird am Motor befestigt, und über eine Zentrierbuchse 13 wird das getriebeseitige Modul relativ zum Motor zentriert. Gemäß dem hier gemachten Vorschlag wird dann zuletzt die Flexplatte 2 mit dem Rotorträger 5 verschraubt, und zwar durch die Montageöffnung 21 hindurch.

Das gesamte Modul, umfassend die Doppelkupplung 20, den Torsionsschwingungsdämpfer 18, die Ölzuführnabe 66, das Gehäuse 26 und die Flexplatte 2 kann also als Einheit am Getriebe befestigt werden. Dies bietet den Vorteil, dass die Montage vereinfacht wird und Fehlermöglichkeiten bei der Montage minimiert werden.

Ein wesentlicher Vorteil der Konstruktion gemäß Fig. 16 liegt auch darin, dass die Verbindung zwischen dem Kupplungsmodul und dem Kurbelwellenstartergenerator über eine einfache und sehr effektive Flexplattenanordnung hergestellt wird. Vorteilhaft ist ferner, dass die Kupplungsglocke durch die Montageöffnungen 21 zusätzlich gelüftet/gekühlt werden kann. Durch die Öffnungen 21 können auch von Außen Zusatzgeräte montiert/demontiert werden und die Montage solcher Anbauteile wird grundsätzlich erleichtert.

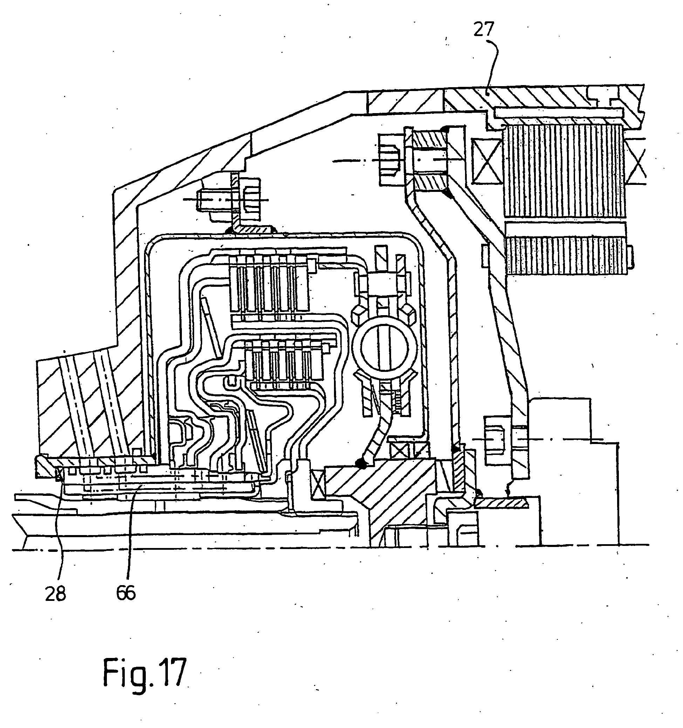

Die Konstruktion der Fig. 17 entspricht im Wesentlichen der Konstruktion der Fig. 16. Hier ist der Kurbelwellenstartergenerator allerdings in Innenläufer-Bauweise realisiert. Die Statorkühlung ist in einen Zwischenflansch 27 integriert. Auch hier kann die Statorkühlung vermittels des Motorkühlkreislaufs realisiert werden.

Zur Fig. 16 und Fig. 17 ist noch zu ergänzen, dass zwischen der Ölzufuhrnabe (Ringteil 66) und der Lagerhülse des Kupplungsgehäuses ein Axiallager 28 vorgesehen sein kann.

In Fig. 16 sind noch einige weitere Bauteile durch Bezugszeichen identifiziert: 11 = topfartiges Befestigungselement, 12 = Zentralschraube, 15 = Radialwellendichtring, 16 = Radiallager, 17 = Axiallager, 1 = Kurbelwellenschraube, 22 = Befestigungsauge am Getriebegehäuse, 23 = Befestigungslasche, 24 = Zentrierbund am Getriebegehäuse, 19 = Verzahnung zwischen Torsionsschwingungsdämpfer und Außenlamellenträger, 4 = Verschraubung zur Verbindung von Flexplatte und Rotorträger 5, 3 = Klötzchen.

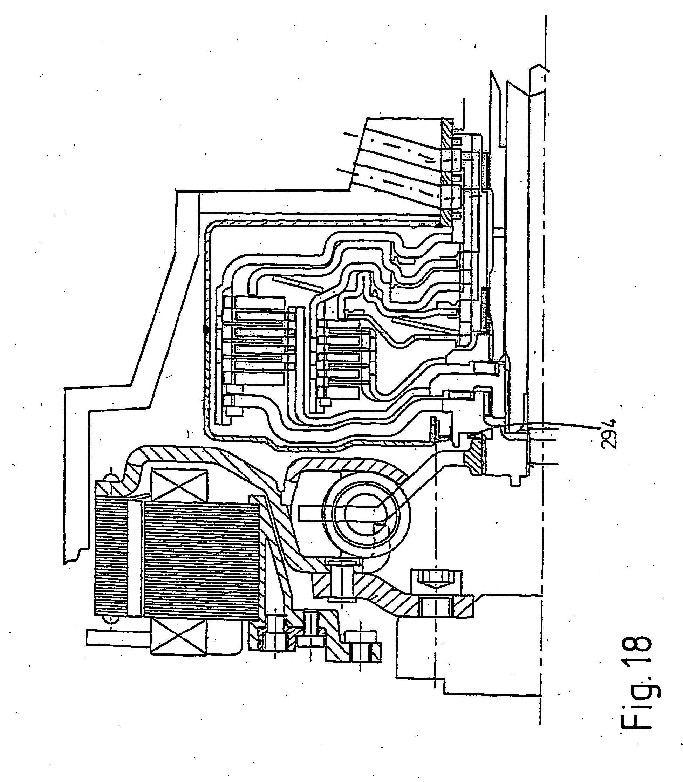

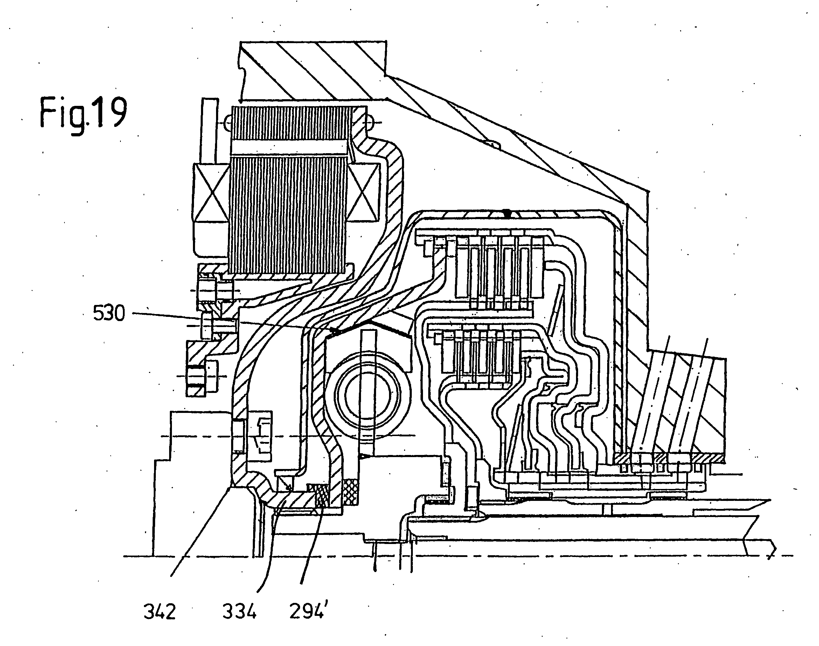

Fig. 18 und 19 zeigen Weiterbildungen der in den Fig. 11 und 13 gezeigten Antriebssysteme. Gemäß Fig. 18 und 19 ist die nasslaufende Doppelkupplung jeweils mit einem feststehenden Gehäuse ausgeführt, das einen Nassraum der Doppelkupplung begrenzt. Durch Verzicht auf einen Sicherungsring entsprechend dem Sicherungsring 96 der Fig. 1 kann die Doppelkupplung einschließlich dem Gehäuse und gegebenenfalls dem in die Doppelkupplung integrierten Torsionsschwingungsdämpfer (Fig. 19) als Modul getriebeseitig montiert werden. Im zusammengefügten Antriebsstrang erfolgt die axiale Abstützung der Doppelkupplung in Richtung zur Antriebseinheit an der Sekundärseite des Torsionsschwingungsdämpfers (Fig. 18; beispielsweise unter Vermittlung einer Federanordnung, etwa einer Tellerfeder 294) oder an der motorseitigen Koppelanordnung (Fig. 19; am Flanschabschnitt 334, beispielsweise unter Vermittlung eines elastischen Zwischenrings 294'). Ansonsten sind die Fig. 18 und 19 auf Grundlage der vorangehenden Beschreibung der Fig. 11 und 13 und der Erläuterung der Ausführungsbeispiele der Fig. 2 bis 10 unmittelbar aus der Zeichnung verständlich, so dass keine weiteren Ausführungen geboten sind.

Weitere Einzelheiten der Doppelkupplungen 12 bzw. des Antriebssystems gemäß den verschiedenen Ausführungsbeispielen und insbesondere Unterschiede zwischen den verschiedenen Doppelkupplungen sind vom Fachmann ohne Weiteres den Figuren entnehmbar.

## Patentansprüche

1. Antriebsstrang eines Kraftfahrzeugs mit einer zwischen einer Antriebseinheit und einem Getriebe angeordneten Mehrfach-Kupplungseinrichtung, gegebenenfalls Doppel-Kupplungseinrichtung (12), wobei die Kupplungseinrichtung (12) eine einer ersten Getriebeeingangswelle (22) des Getriebes zugeordnete erste Kupplungsanordnung (64) und eine einer zweiten Getriebeeingangswelle (24) des Getriebes zugeordnete zweite Kupplungsanordnung (72) zur Momentenübertragung zwischen der Antriebseinheit und dem Getriebe aufweist welche Kupplungsanordnungen (64, 72) als nasslaufende Kupplungsanordnungen ausgeführt sind,
**dadurch gekennzeichnet,**
**dass** die Kupplungseinrichtung ein gegenüber einem Getriebegehäuse (20) gesondertes, innerhalb einer Getriebegehäuseglocke (18), axial oder/und gegen Verdrehung festgelegtes gegenüber den Kupplungsanordnungen stationäres Kupplungsgehäuse (200) aufweist, das einen die Kupplungsanordnungen (64, 72) aufnehmenden und nach außen hin abgedichteten Nassraum definiert und das im Antriebsstrang getriebeseitig angebracht oder anbringbar ist.

2. Antriebsstrang nach Anspruch 1,
**dadurch gekennzeichnet,**
**dass** das Kupplungsgehäuse am Getriebegehäuse (20) axial oder/und gegen Verdrehung festgelegt oder festlegbar ist oder/und unter Vermittlung des Getriebegehäuses (20) in Bezug auf die zueinander koaxial und radial geschachtelt angeordneten Getriebeeingangswellen (22, 24) zentriert oder zentrierbar ist.

3. Antriebsstrang nach Anspruch 2,
**dadurch gekennzeichnet,**
**dass** das Kupplungsgehäuse (200) eine Lagerhülse (202) aufweist, die in eine getriebeseitige Aufnahme (204) eingreift, vorzugsweise derart, dass das Kupplungsgehäuse (200) in Bezug auf die sich durch die Lagerhülse (202) erstreckenden Getriebeeingangswellen (22, 24) zentriert wird.

4. Antriebsstrang nach Anspruch 3,
**dadurch gekennzeichnet,**
**dass** die Lagerhülse (202) in der Aufnahme (204) axial oder/und gegen Verdrehen gesichert ist, vorzugsweise durch aufeinander bezogene Formschluss-Eingriffsformationen (206), höchstvorzugsweise durch aufeinander bezogene Schnapp-Eingriffsformationen (206).

5. Antriebsstrang nach Anspruch 4,
**dadurch gekennzeichnet,**
**dass** in der Lagerhülse (202) ein den Kupplungsanordnungen (64, 72) gemeinsames, gegenüber der Lagerhülse verdrehbares und gegebenenfalls rohrartiges Ringteil (66) aufgenommen ist, über das die Kupplungsanordnungen an wenigstens einer der Getriebeeingangswellen gelagert oder lagerbar sind und das vorzugsweise mit einer jeweiligen Eingangsseite (62, 70) der Kupplungsanordnungen drehfest verbunden ist.

6. Antriebsstrang nach einem der Ansprüche 3 bis 5,
**dadurch gekennzeichnet,**
**dass** die Aufnahme (204) Hydraulikmedium-Anschlüsse (224, 226) zum Anschließen von die Kupplungsanordnungen betätigenden hydraulischen Nehmerzylindern der Kupplungseinrichtung aufweist, wobei der Anschluss der hydraulischen Nehmerzylinder unter Vermittlung der Lagerhülse (206) oder/und des Ringteils (66) erfolgt.

7. Antriebsstrang nach einem der Ansprüche 2 bis 6,
**dadurch gekennzeichnet,**
**dass** das Kupplungsgehäuse (200) an einem den Nassraum begrenzenden Wandungsabschnitt (20) am Getriebe axial oder/und gegen Verdrehen gesichert oder sicherbar ist oder/und in Bezug auf die Getriebeeingangswellen zentriert oder zentrierbar ist, unter Vermittlung von von der Wandung abstehenden Halte- oder/und Zentrierformationen (208) und mit diesen zusammenwirkenden Gegenformationen (210, 214) an einer Getriebegehäusewandung.

8. Antriebsstrang nach einem der Ansprüche 1 bis 7,
**dadurch gekennzeichnet,**
**dass** das Kupplungsgehäuse (200) aus mehreren, vorzugsweise aus zwei Gehäuseschalen (200a, 200b) zusammengefügt ist, die gegebenenfalls miteinander verschweißt oder verschraubt sind.

9. Antriebsstrang nach einem der Ansprüche 1 bis 8,
**dadurch gekennzeichnet,**
**dass** das Kupplungsgehäuse (200) mit wenigstens einer Betriebsmedium-Abflussleitung (240) ausgeführt ist, die vorzugsweise als Kühlwendel ausgebildet ist oder mit einer Kühlwendel (242) im Wärmeaustauscherbeziehung steht.

10. Antriebsstrang nach einem der Ansprüche 1 bis 9,
**dadurch gekennzeichnet,**
**dass** die Kupplungseinrichtung (12) samt dem Kupplungsgehäuse (200) als vormontierte Baueinheit (12, 200) getriebeseitig in den Antriebsstrang montiert und vorzugsweise als Baueinheit (12, 200) vom Getriebe demontierbar ist.

11. Antriebsstrang nach Anspruch 1,
**dadurch gekennzeichnet,**
**dass** das Kupplungsgehäuse (200) in der Getriebegehäuseglocke (18) axial oder/und gegen Verdrehung festgelegt ist, die zusammen mit dem Kupplungsgehäuse einen unter Vermittlung des Kupplungsgehäuses gegenüber dem Nassraum abgedichteten Trockenraum begrenzt.

12. Antriebsstrang nach Anspruch 11, **dadurch gekennzeichnet, dass** eine den Trockenraum begrenzende Getriebegehäusewandung (20) mit wenigstens einer Öffnung (230) ausgeführt ist, die eine Kühlung beziehungsweise Lüftung des Glockeninnenraums durch Luftaustausch ermöglicht oder/und einen Zugang in den Glockeninnenraum zur Montage beziehungsweise Demontage wenigstens eines der Kupplungseinrichtung (12) zugeordneten Zusatzgeräts (286) gibt.

## Claims

1. Drive train of a motor vehicle, with a multiple clutch device, if appropriate double clutch device (12), arranged between a drive unit and a transmission, the clutch device (12) having a first clutch arrangement (64), assigned to a first transmission input shaft (22) of the transmission, and a second clutch arrangement (72), assigned to a second transmission input shaft (24) of the transmission, for the transfer of torque between the drive unit and the transmission, the said clutch arrangements (64, 72) being designed as wet-running clutch arrangements, **characterized in that** the clutch device has a clutch housing (200) which is separate from a transmission housing (20), is secured axially and/or against rotation within a transmission-housing bell and is stationary with respect to the clutch arrangements and which defines a wet space receiving the clutch arrangements (64, 72) and sealed off outwardly and is mounted or mountable in the drive train on the transmission side.

2. Drive train according to Claim 1, **characterized in that** the clutch housing is secured or securable to the transmission housing (20) axially and/or against rotation and/or is centred or centreable by means of the transmission housing (20) with respect to the transmission input shafts (22, 24) arranged coaxially to one another and so as to be radially nested.

3. Drive train according to Claim 2, **characterized in that** the clutch housing (200) has a bearing sleeve (202) which engages into a transmission-side receptacle (204), preferably in such a way that the clutch housing (200) is centred with respect to the transmission input shafts (22, 24) extending through the bearing sleeve (202).

4. Drive train according to Claim 3, **characterized in that** the bearing sleeve (202) is secured in the receptacle (204) axially and/or against rotation, preferably by means of form-fit engagement formations (206) related to one another, most preferably by means of snap-engagement formations (206) related to one another.

5. Drive train according to Claim 4, **characterized in that** the bearing sleeve (202) receives an, if appropriate, tube-like ring part (66) which is common to the clutch arrangements (64, 72) and is rotatable with respect to the bearing sleeve and via which the clutch arrangements are mounted or mountable on at least one of the transmission input shafts and which is preferably connected fixedly in terms of rotation to a respective input side (62, 70) of the clutch arrangements.

6. Drive train according to one of Claims 3 to 5, **characterized in that** the receptacle (204) has hydraulic-medium connections (224, 226) for the connection of hydraulic slave cylinders of the clutch device which actuate the clutch arrangements, the connection of the hydraulic slave cylinders taking place by means of the bearing sleeve (202) and/or the ring part (66).

7. Drive train according to one of Claims 2 to 6, **characterized in that** the clutch housing (200) is secured or securable to the transmission axially and/or against rotation on a wall portion (20) delimiting the wet space and/or is centred or centrable with respect to the transmission input shafts, by means of holding and/or centring formations (208) projecting from the wall and counterformations (210, 214) on a transmission-housing wall which cooperate with these.

8. Drive train according to one of Claims 1 to 7, **characterized in that** the clutch housing (200) is assembled from a plurality of, preferably from two housing shells (200a, 200b) which, if appropriate, are welded or screwed to one another.

9. Drive train according to one of Claims 1 to 8, **characterized in that** the clutch housing (200) is designed with at least one operating-medium outflow line (240) which is designed preferably as a cooling coil or which is in heat-exchange relation with a cooling coil (242).

10. Drive train according to one of Claims 1 to 9, **characterized in that** the clutch device (12), together with the clutch housing (200), is mounted as a preassembled structural unit (12, 200) in the drive train on the transmission side and is demountable preferably as a structural unit (12, 200) from the transmission.

11. Drive train according to Claim 1, **characterized in that** the clutch housing (200) is secured axially and/or against rotation in the transmission-housing bell (18) which, together with the clutch housing, delimits a dry space sealed off from the wet space by means of the clutch housing.

12. Drive train according to Claim 11, **characterized in that** a transmission-housing wall (20) delimiting the dry space is designed with at least one port (230) which allows cooling or ventilation of the bell interior by air exchange and/or gives access into the bell interior for mounting or demounting at least one accessory (286) assigned to the clutch device (12).

## Revendications

1. Ligne d'entraînement d'un véhicule automobile, avec un dispositif d'embrayage multiple, éventuellement un dispositif d'embrayage double (12), disposé entre une unité d'entraînement et une boîte de vitesses, sachant que le dispositif d'embrayage (12) présente, pour la transmission de couple entre l'unité d'entraînement et la boîte de vitesses, un premier ensemble d'embrayage (64) associé à un premier arbre (22) d'entrée de boîte et un deuxième ensemble d'embrayage (72) associé à un deuxième arbre (24) d'entrée de boîte, les ensembles d'embrayage (64, 72) étant réalisés sous la forme d'ensembles d'embrayage à fonctionnement humide,
**caractérisée en ce que** le dispositif d'embrayage présente un carter d'embrayage (200) distinct d'un carter de boîte (20), stationnaire par rapport aux ensembles d'embrayage et immobilisé axialement et/ou en rotation à l'intérieur d'une cloche (18) de carter de boîte, carter qui définit une chambre humide recevant les ensembles d'embrayage (64, 72) et étanché vis-à-vis de l'extérieur, et qui est ou peut être installé côté boîte dans la ligne d'entraînement.

2. Ligne d'entraînement selon la revendication 1, **caractérisée en ce que** le carter d'embrayage est ou peut être immobilisé axialement et/ou en rotation sur le carter de boîte (20), et/ou est ou peut être, par l'intermédiaire du carter de boîte (20), centré par rapport aux arbres (22, 24) d'entrée de boîte disposés en étant imbriqués radialement et mutuellement coaxiaux.

3. Ligne d'entraînement selon la revendication 2, **caractérisée en ce que** le carter d'embrayage (200) présente un manchon de palier (202) qui s'engage dans un logement (204) côté boîte, de préférence de telle sorte que le carter d'embrayage (200) est centré par rapport aux arbres (22, 24) d'entrée de boîte s'étendant à travers le manchon de palier (202).

4. Ligne d'entraînement selon la revendication 3, **caractérisée en ce que** le manchon de palier (202) est bloqué axialement et/ou en rotation dans le logement (204), de préférence par des formations complémentaires (206) d'engagement positif, d'une manière encore plus préférée par des formations complémentaires (206) d'engagement par enclenchement.

5. Ligne d'entraînement selon la revendication 4, **caractérisée en ce qu'**un élément annulaire (66) commun aux ensembles d'embrayage (64, 72), rotatif par rapport au manchon de palier et éventuellement du genre tube, est reçu dans le manchon de palier (202), élément au moyen duquel les ensembles d'embrayage sont ou peuvent être montés sur au moins un des arbres d'entrée de boîte, et qui est de préférence lié en rotation à un côté d'entrée respectif (62, 70) des ensembles d'embrayage.

6. Ligne d'entraînement selon l'une quelconque des revendications 3 à 5, **caractérisée en ce que** le logement (204) présente des branchements (224, 226) de fluide hydraulique pour le raccordement de cylindres hydrauliques récepteurs du dispositif d'embrayage qui actionnent les ensembles d'embrayage, sachant que le raccordement des cylindres hydrauliques récepteurs s'effectue par l'intermédiaire du manchon de palier (202) et/ou de l'élément annulaire (66).

7. Ligne d'entraînement selon l'une quelconque des revendications 2 à 6, **caractérisée en ce que** le carter d'embrayage (200) est ou peut être, sur une partie de paroi (20) de la boîte de vitesses qui délimite la chambre humide, bloqué axialement et/ou en rotation, et/ou centré par rapport aux arbres d'entrée de boîte, par l'intermédiaire de formations de maintien et/ou de centrages (208) partant en saillie de sa paroi et de formations complémentaires (210, 214) prévues sur une paroi de carter de boîte et coopérant avec lesdites formations.

8. Ligne d'entraînement selon l'une quelconque des revendications 1 à 7, **caractérisée en ce que** le carter d'embrayage (200) est composé de plusieurs, de préférence deux coques de carter (200a, 200b), qui sont éventuellement assemblées entre elles par soudage ou vissage.

9. Ligne d'entraînement selon l'une quelconque des revendications 1 à 8, **caractérisée en ce que** le carter d'embrayage (200) est doté d'au moins une conduite (240) d'évacuation de fluide de service, qui est de préférence réalisée en forme de spirale réfrigérante ou se trouve en relation d'échange de chaleur avec une spirale réfrigérante (242).

10. Ligne d'entraînement selon l'une quelconque des revendications 1 à 9, **caractérisée en ce que** le dispositif d'embrayage (12), carter d'embrayage (200) compris, est monté côté boîte dans la ligne d'entraînement sous la forme d'une unité de construction pré-assemblée (12, 200), et peut être de préférence démonté de la boîte de vitesses sous la forme d'une unité de construction (12, 200).

11. Ligne d'entraînement selon la revendication 1, **caractérisée en ce que** le carter d'embrayage (200) est immobilisé axialement et/ou en rotation dans la cloche (18) de carter de boîte qui définit conjointement avec le dispositif d'embrayage une chambre sèche étanchée vis-à-vis de la chambre humide par l'intermédiaire du carter d'embrayage.

12. Ligne d'entraînement selon la revendication 11, **caractérisée en ce qu'**une paroi (20) de carter de boîte délimitant la chambre sèche est dotée d'au moins une ouverture (230) qui permet un refroidissement ou encore une aération de l'espace intérieur de la cloche par échange d'air, et/ou qui permet d'accéder à l'espace intérieur de la cloche afin de monter ou de démonter au moins un appareil auxiliaire (286) associé au dispositif d'embrayage (12).
